(19) Europäisches Patentamt
European Patent Office
Office européen des brevets

(11) **EP 4 189 634 B1**

(12) **EUROPEAN PATENT SPECIFICATION**

(45) Date of publication and mention
of the grant of the patent:
**03.12.2025 Bulletin 2025/49**

(21) Application number: **20775500.0**

(22) Date of filing: **04.09.2020**

(51) International Patent Classification (IPC):
**G06T 5/00** (2024.01)  **G06T 5/50** (2006.01)
**G06T 5/10** (2006.01)

(52) Cooperative Patent Classification (CPC):
**G06T 5/70; G06T 5/10; G06T 5/50;**
G06T 2207/10016; G06T 2207/20182

(86) International application number:
**PCT/US2020/049340**

(87) International publication number:
**WO 2022/050949 (10.03.2022 Gazette 2022/10)**

(54) **FILTER FOR TEMPORAL NOISE REDUCTION**

FILTER ZUR ZEITLICHEN RAUSCHVERMINDERUNG

FILTRE POUR LA RÉDUCTION DU BRUIT TEMPOREL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.06.2023 Bulletin 2023/23**

(73) Proprietor: **Google LLC**
**Mountain View, CA 94043 (US)**

(72) Inventor: **NISHIMURA, Jun**
**Mountain View, California 94043 (US)**

(74) Representative: **Marks & Clerk GST**
**1 New York Street**
**Manchester M1 4HD (GB)**

(56) References cited:
EP-A2- 1 681 849    EP-B1- 1 681 849
US-A- 5 442 462    US-A1- 2007 070 250
US-A1- 2020 027 202

• KIM MINJAE ET AL: "A novel approach for
denoising and enhancement of extremely low-
light video", IEEE TRANSACTIONS ON
CONSUMER ELECTRONICS, IEEE SERVICE
CENTER, NEW YORK, NY, US, vol. 61, no. 1, 1
February 2015 (2015-02-01), pages 72 - 80,
XP011576366, ISSN: 0098-3063, [retrieved on
20150319], DOI: 10.1109/TCE.2015.7064113

**Description**

TECHNICAL FIELD

This description generally relates to filters for reducing image noise.

BACKGROUND

Low light video capture is an essential camera feature that relies on temporal noise reduction. Temporal noise reduction works by blending previous output and current input using a blending ratio. The blending ratio, for example, the weight of the previous output, is calculated by the temporal difference of the current input and the previous output. A low blending ratio is used when there is high temporal difference between frames, and high blending ratio is used when there is low temporal difference between frames. Although this can be useful to account for variance between frames, it can result in noisy images due to, for example, overreliance on a previous frame when the variance is low.

Kim Minjae et al, "A novel approach for denoising and enhancement of extremely low-light video", in IEEE Transactions on Consumer Electronics, 61(1), p72-80 describes a novel approach for noise reduction and enhancement of extremely low-light video, including motion adaptive temporal filtering based on a Kalman structured updating. EP1681849 describes another apparatus for removing noise in a video signal, in which a noise level is estimated through adaptive filtering. US 544262A describes an apparatus for noise reduction which employs an adaptive, acuity-preserving, multi-directional and multi-dimensional smoothing method.

SUMMARY

An image processing model is proposed as defined in claim 1. Also prosposed is a system or device as defined by claim 14, and one or more transitory machine-readable media as defined by claim 15. In some implementations, a filter is used for temporal noise reduction in captured video or video in the process of being captured. The filter may incorporate a Kalman filter with sigmoid interpolation based temporal noise reduction. In doing this, the filter can account for the uncertainty of a previous output such as noise variance of the previous output, the uncertainty in a current input such as an indication of the noise in the current input, and the temporal difference between the previous output and the current input when generating output image data such as the change in scene between the previous output and the current input. The filter may be used to determine a noise variance that corresponds to the output image data. The noise variance may be an estimation of noise across different portions of the output image data. The filter may use the noise variance in determining Kalman gain values that are then used to generate the output image data.

Low light video capture presents unique challenges due to the high noise typically present in the captured images. Temporal noise reduction is a technique used to improve the image quality in captured low light video, which works by blending previous output and current input. By implementing a filter that incorporates a Kalman gain filter with Sigmoid interpolation based temporal noise reduction, the variance of the previous output of the filter can be accounted for, along with the temporal difference between the previous output and a current input to the filter and the spatial noise of the current input, in determining how to blend the previous output with the current input. This can lead to a number of improvements, including improved temporal noise reduction, quicker temporal noise reduction (e.g., faster noise reduction convergence), and/or reduce the ghosting artifact in the video.

As an example, as a result of taking into account the uncertainty of the previous output such as the noise variance of the previous output, a blending ratio can be determined for blending all or a portion of an input image with all or a portion of a previous output image so as to most effectively and quickly perform temporal noise reduction on a given video. This reduces or effectively eliminates, for example, the overweighting of the previous output during blending, which can result in undesirable noise and/or slow noise reduction convergence.

In one general aspect, a method includes: obtaining image data for a series of frames of a video, the series of frames includes a first input frame followed by a second input frame; obtaining (i) a first output frame resulting from noise reduction processing for the first input frame and (ii) a measure of variance associated with a portion of the first output frame, where the measure of variance represents a variance between the portion of the first input frame and a corresponding portion of one or more previous input frames; determining an interpolation setting for noise reduction processing of a portion of the second input frame based on (i) a measure of noise for the portion of the second input frame and (ii) the measure of variance associated with a corresponding portion of the first output frame; and generating a second output frame by interpolating the portion of the second input frame with the corresponding portion of the first output frame using the determined interpolation setting.

Implementations may include one or more of the following features. For example, in some implementations, the method includes

In some implementations, the method includes determining the measure of noise present in the portion of the second input frame includes determining a noise estimate for the second input frame using a noise model.

In some implementations, the measure of noise for the portion of the second input frame is a noise variance.

Determining the interpolation setting for noise reduction processing the portion of the second input frame includes: determining a Kalman maximum gain based on (i) the measure of noise for the second input frame and (ii) the measure of variance associated with the first output frame; and determining a sigmoid interpolation factor for the second input frame. Generating the second output frame includes interpolating the second input frame with the first output frame by an amount determined based on the Kalman maximum gain and the sigmoid interpolation factor.

In some implementations, the sigmoid interpolation factor is determined based on a threshold, a transition gain value, and a temporal difference measure indicating differences between the portion of the second input frame and the corresponding portion of the first output frame.

In some implementations, the second input frame includes pixels, and where the method includes determining different interpolation settings for interpolating different groups of pixels of the second input frame with corresponding groups of pixels of the first output frame.

In some implementations, the method includes determining a two-dimensional map of interpolation settings for different blocks of pixels, where the interpolation setting for noise reduction processing of the portion of the second input frame is one of the interpolation settings in the two-dimensional map of interpolation settings.

In some implementations, the different blocks of pixels include at least two blocks of pixels in the second input frame and at least two corresponding blocks of pixels in the first output frame.

In some implementations, the method includes determining one or more of the following: a two-dimensional variance map of variances corresponding to different blocks of pixels of the first output frame, where the measure of variance associated with the portion of the first output frame is one of the variances of the two-dimensional variance map; a two-dimensional noise estimate map of noise estimates for different blocks of pixels of the second input frame, where the measure of noise for the portion of the second input frame is one of the noise estimates in the two-dimensional noise estimate map; a two-dimensional Kalman gain map of Kalman maximum gains corresponding to different blocks of pixels, where the interpolation setting for noise reduction processing includes one of the Kalman maximum gains in the two-dimensional Kalman gain map; or a two-dimensional sigmoid interpolation filter map of sigmoid interpolation factors corresponding to different blocks of pixels, where the interpolation setting for noise reduction processing includes one of the sigmoid interpolation factors in the two-dimensional sigmoid interpolation filter map.

In some implementations, the method includes determining a measure of variance associated with the second output frame based on at least one of the measure of variance associated with the portion of the first output frame or the interpolation setting for noise reduction processing of the portion of the second input frame.

In some implementations, the method includes: storing the measure of variance associated with the second output frame; and using the stored measure of variance associated with the second output frame to determine an interpolation setting for a third input frame that follows the second input frame in a set of frames that correspond to a video, where the set of frames include the first input frame, the second input frame, and the third input frame.

In some implementations, determining the measure of variance associated with the second output frame includes at least one of the following: applying a temporal smoothing factor to the measure of variance associated with the portion of the first output frame; updating the measure of variance associated with the portion of the first output frame by reducing with a Kalman maximum gain for the second input frame; or updating the measure of variance associated with the portion of the first output frame by resetting to an input noise estimate for the second input frame.

In some implementations, the method includes using motion vector estimation to determine that the portion of the second input frame corresponds to the portion of the first output frame.

In some implementations, generating the second output frame includes applying a scaling factor to the portion of the second input frame prior to interpolating the portion of the second input frame with the corresponding portion of the first output frame.

In some implementations, generating the second output frame includes applying unity minus the scaling factor to the portion of the first output frame prior to interpolating the portion of the second input frame with the corresponding portion of the first output frame.

In some implementations, the method includes storing the second output frame.

Particular embodiments of the subject matter described in this specification can be implemented so as to realize one or more of the following advantages. For example, the techniques disclosed in this document can be used to improve video quality, particularly in low light conditions. Low light conditions generally result in the capturing of high noise video. As a result, frames of the video, or portions thereof, can be blended together in an effort to reduce the noise in the video. Notably, image frames of a video, or portions thereof, can be blended using a filter that takes into account the uncertainty (e.g., noise level) of the previous output of the filter. By taking into account the uncertainty of the previous output, the disclosed filter can reduce noise in the video, reduce the ghosting artifact in the video, and/or more quickly reach noise reduction convergence. Specifically, as a result of taking into account the uncertainty of the previous output, a blending ratio can be selected for blending all or a portion of an input image with all or a portion of a previous output image so as to most effectively and quickly perform temporal noise reduction. This reduces or effectively eliminates, for example, the overweighting of the previous output during blending, which can result in undesirable noise and/or slow noise reduction convergence.

Other embodiments of this aspect include corresponding computer systems, apparatus, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

Details of one or more implementations are set forth in the accompanying drawings and the description below. Other features, objects, and advantages will be apparent from the description and drawings, and from the claims.

DESCRIPTION OF DRAWINGS

FIG. 1 is a diagram depicting an example filter for temporal noise reduction.
FIG. 2A is a diagram that illustrates an existing approach to using a filter for temporal noise reduction.
FIG. 2B is a diagram that illustrates using a filter for temporal noise reduction.
FIG. 3 is an example diagram that illustrates an input frame, an input noise map corresponding to the input frame, a previous output frame, and a previous variance map corresponding to the previous output frame.
FIG. 4 is a block diagram illustrating a filter for temporal noise reduction.
FIG. 5 is a block diagram illustrating a filter for temporal noise reduction.
FIG. 6 is a block diagram illustrating a filter for temporal noise reduction.
FIG. 7 is a flowchart showing an example process for using a filter for temporal noise reduction.

Like reference symbols in the various drawings indicate like elements.

DETAILED DESCRIPTION

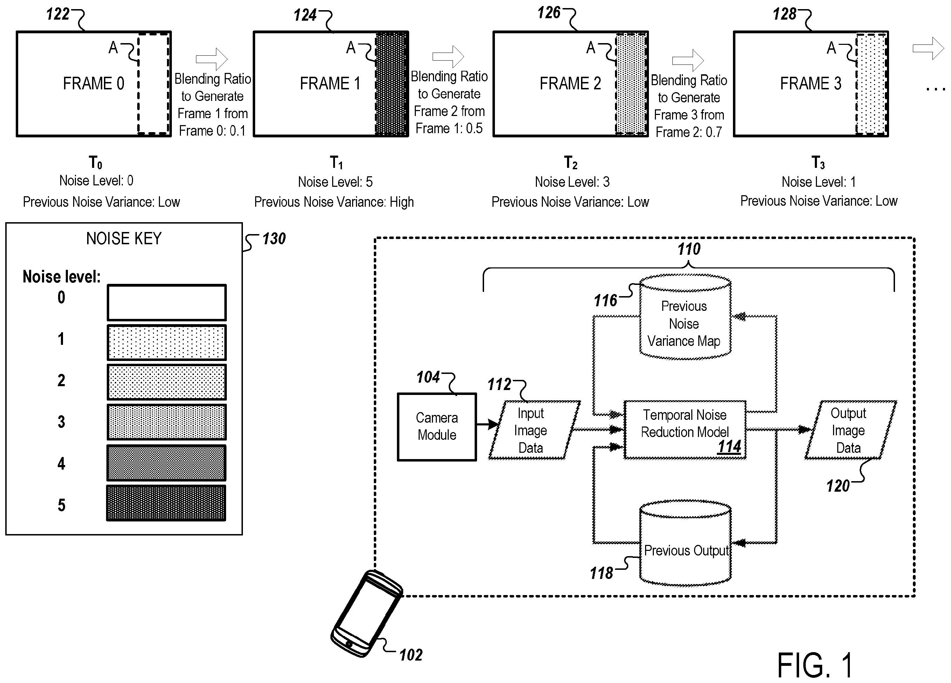

FIG. 1 is a diagram depicting an example filter 110 for temporal noise reduction. The filter 110 can be used to improve video quality, particularly in low light conditions, by taking into account the noise of the previous output of the filter 110 when generating output image data. The filter 110 includes input image data 112, a temporal noise reduction (TNR) model 114, a previous output 118, a previous noise variance map 116 that corresponds to the previous output 118, and output image data 120. The input image data 112 can be provided by a camera module 104 of a computing device 102. The input image data 112 can include an image or a portion of an image. Similarly, the output image data 120 can include an image or a portion of an image.

In general, noise variance is an estimation of noise across different portions of an output frame. For example, the noise variance map 116 may be an estimate of the noise across different regions (e.g., portions) of the previous output 118. The noise variance for an output frame may be based on (i) the noise variance for the prior output frame, (ii) the noise model output for the current input frame, and (iii) the amount and location of change in the scene covered by the current frame. The change in the scene may be the change in the scene between the prior output frame and the current input frame. As a result, the noise variance data for an output frame shows the variation in noise to be expected across the output frame.

The filter 110 may be a type of Kalman filter. For example, the filter 110 may be a linear Kalman filter. Alternatively, the filter 110 may be a nonlinear Kalman filter such as an extended Kalman filter (EKF). An EKF may be capable of addressing inaccuracies of motion estimation by using nonlinear formulations. Accordingly, although formulations for the filter 110 are described below using example linear formulations, nonlinear formulations may be used instead.

In generating the output image data 120, the filter 110 may process the input image data 112. For example, the filter 110 may process an entire image frame at once. Alternatively, in generating the output image data 120, the filter 110 may process different portions/regions corresponding to groupings of pixels (blocks of pixels) in the input image data 112 and/or the previous output 118 at a time or multiple in parallel. That is, the filter 110 can, for example, process the input image data 112 pixel block by pixel block. The blocks of pixels that make up the input image data 112 can be, for example, 4X4 pixels, 4X8 pixels, 8X4 pixels, 8X8 pixels, 8X16 pixels, 16X8 pixels, or 16X16 pixels each. As an example, in generating the previous noise map, the filter 110 may determine a value for each block of pixels in the previous output 118 to be included in the noise map. Where the values can each represent the average noise for the pixels in their corresponding block of pixels of the previous output 118.

In some cases, in generating the output image data 120, the filter 110 processes the individual pixels of the input image data 112. That is, the filter 110 may, for example, process the input image data 112 pixel by pixel (e.g., at a time or multiple in parallel).

The previous output 118 can correspond to the input image data immediately preceding the input image data 112, e.g., in a captured video. For example, the previous output 118 can be generated using the filter 110 from an input video frame at time T, when the input image data 112 is a video frame at time T+1.

The previous noise variance map 116 may include a number values that each correspond to a level of variance or to a Kalman gain. As an example, the previous noise variance map 116 can be a two-dimensional variance map. The noise variance map 116 can be generated using a Kalman gain map (e.g., that is itself generated from a noise variance map immediately preceding the previous noise variance map 116 and a noise map of prior input image data). Notably, the previous noise variance map 116 may represent the spatially varying variance change with frame-by-frame progress of temporal noise reduction. That is, the previous noise variance map 116 may represent the estimated noise across different portions of the previous output 118 that, for example, takes into account the noise variance of an output frame immediately preceding the previous output 118, a noise model output based on input image data immediately preceding the input image data 112, and the amount and location of change in the scene between the output frame immediately preceding the previous output 118 and the input image data immediately preceding the input image data 112. Accordingly, each of the values in the previous noise variance map 116 may correspond to a particular group of pixels (e.g., a block of pixels) in the previous output 118.

The previous noise variance map 116 can be based on a prior variance (e.g., the noise map immediately preceding the previous noise variance map 116), the noise of input image data immediately preceding the input image data 112, and the temporal difference between a prior output image data (e.g., output image data immediately preceding the previous output 118) and the input image data immediately preceding the input image data 112. For example, the TNR model 114 can generate a new noise map corresponding to the output image data 120 by updating the previous noise variance map 116 using the noise in the input image data 112, the previous noise variance map 116, and the temporal difference existing between the input image data 112 and the previous output 118.

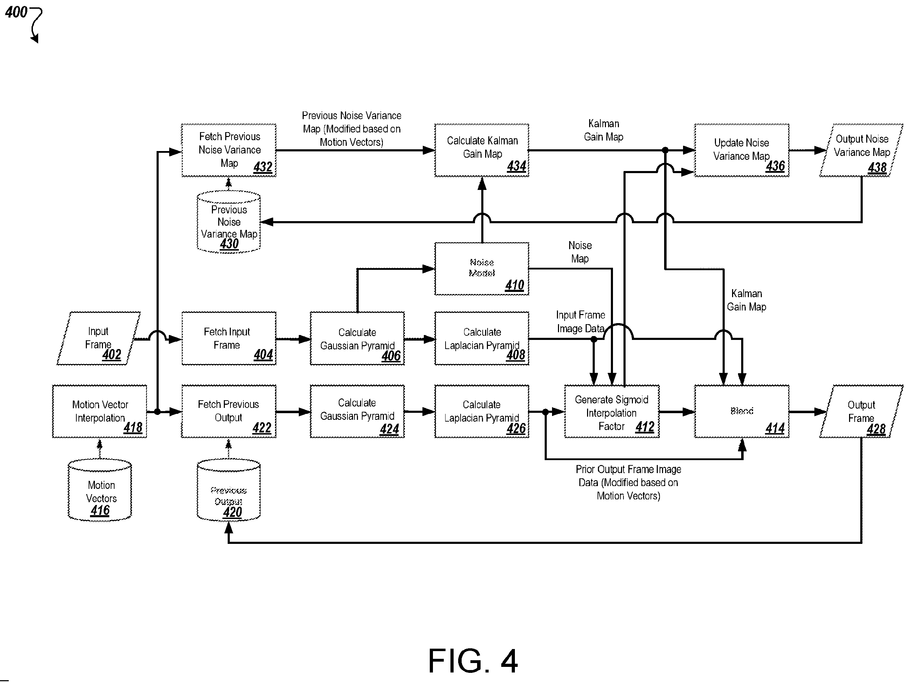

As will be described in more detail below with respect to FIGS. 4, 5, and 6, the filter 110 can include a Kalman filter. The Kalman filter may be incorporated in the TNR model 114 and used to generate the previous noise variance map 116.

As will be described in more detail below with respect to FIGS. 4, 5, and 6, the TNR model 114 of the filter 110 may include one or more algorithms. These algorithms can include static algorithms, machine learning algorithms, or a combination thereof. The one or more algorithms can be used to perform temporal noise reduction in captured video or video that is in the process of being captured (e.g., using the computing device 102), particularly in low light and/or high sensor gain conditions. As an example, the TNR model 114 may include a noise model that is used to identify the noise level in the input image data 112. The TNR model 114 may be a sigmoid interpolation based TNR model in that it can generate a sigmoid interpolation factor based on the input image data 112, the previous output 118, and output of the noise model. The Sigmoid interpolation factor may be used in blending the previous output 118 with the input image data 112 to generate the output image data 120.

Noise reduction processing by the filter 110 can be performed on a series of frames of a previously captured video, e.g., captured using the computing device 102. Additionally or alternatively, noise reduction processing by the filter 110 can be performed on a series of frames while the video is being captured (e.g., substantially in real time, or in real-time with a time delay from the capture time) using the computing device 102.

The computing device 102 may be, for example, a mobile computing device such as a smart phone, a mobile phone, a table computer, a smart watch, a laptop computer, a PDA, etc. The computing device 102 may be a desktop computer, a server, or part of a server. The computing device 102 may include one or more cameras, such as one or more visible-light cameras. The computing device 102 may be able to use the one or more cameras to capture image data such as videos. The computing device 102 may include a storage device. The computing device 102 may include memory, such as RAM (e.g., DRAM, SRAM, etc.).

The camera module 104 of the computing device 102 may perform functions with image data stored on the computing device 102 and/or captured by the computing device 102. The image data may include individual images and/or videos containing multiple images. The camera module 104 may provide image data corresponding to a video to the filter 110 in order to perform temporal noise reduction. The camera module 104 may provide image data corresponding to a video to the filter 110 in response to a video being captured by the computing device 102. Additionally or alternatively, the camera module 104 may provide image data corresponding to a video to the filter 110 in response to a user of the computing device 102 indicating through the computing device 102 that the noise in the video should be reduced.

The techniques disclosed in this document can be used to improve video quality, particularly in low light conditions. Low light conditions generally result in the capturing of high noise video. As a result, frames of the video, or portions thereof, can be blended together in an effort to reduce the noise in the video. Notably, image frames of a video, or portions thereof, can be blended using a filter that takes into account the uncertainty (e.g., noise level) of the previous output of the filter. By taking into account the uncertainty of the previous output, the disclosed filter can reduce noise in the video, reduce the ghosting artifact in the video, and/or more quickly reach noise reduction convergence. Specifically, as a result of taking into account the uncertainty of the previous output, a blending ratio can be selected for blending all or a portion of an input image with all or a portion of a previous output image so as to most effectively and quickly perform temporal noise reduction. This reduces or effectively eliminates, for example, the overweighting of the previous output during blending, which can result in undesirable noise and/or slow noise reduction convergence.

In general, a blending ratio may refer be the weight afforded to a previous output when blending a previous output with a current input to generate a new output. Multiple blending ratios may be used to blend a previous output with a current input, each corresponding to a particular portion of the previous output and to a particular portion of the current input. As an example, when a blending ratio of 0.1 is selected, the filter 110 may apply a weight of 0.1 to the previous output frame (or to a portion of the previous output frame) and a weight of 0.9 to a current input frame (or to a portion of the current input frame) to generate a new output frame (or a portion of a new output frame).

In the example of FIG. 1, there are four output frames 122, 124, 126, and 128 that may be generated using the filter 110. As an example, at a time $T_1$ (e.g., $T_0 + 1$), the output frame 124 may be the output image data 120, the previous output 118 may be the output frame 122, and the previous noise variance map 116 may correspond to the output frame 122. Similarly, at a time $T_2$ (e.g., $T_0 + 2$), the output frame 126 may be the output image data 120, the previous output 118 may be the output frame 124, and the previous noise variance map 116 may correspond to the output frame 124. Finally, at a time $T_3$ (e.g., $T_0 + 3$), the output frame 128 may be the output image data 120, the previous output 118 may be the output frame 126, and the previous noise variance map 116 may correspond to the output frame 126.

Each of the output frames 122, 124, 126, and 128 include a region A that corresponds to a grouping of pixels having differing noise levels. The region A of the output frames 122, 124, 126, and 128 may represent a block of pixels or multiple blocks of pixels. Input frames corresponding to the output frames 122, 124, 126, and 128 may also include the region A of pixels, e.g., that may represent a block of pixels or multiple blocks of pixels.

A noise key 130 provides various noise levels and their corresponding visual representation. An increase in noise level corresponds to a reduction in image quality. Increased noise may result from a temporal variance between an input frame and a previous output frame, e.g., as a result of an object depicted in the previous output frame having moved positions.

As shown, the output frame 122, including region A of the output frame 122, has a noise level of 0 indicating substantially no noise among the pixels in the output frame 122, e.g., due in part to low temporal variance between an input frame corresponding to the output frame 122 and a previous output frame (e.g., output frame at time $T_0 - 1$). In contrast, with respect to the generation of the output frame 124, there exists a high temporal variance between the region A of an input frame corresponding to the output frame 124 and the region A of the output frame 122. The high temporal variance indicates that there has been significant changes in the pixels of the region A between the time $T_0$ and the time $T_1$, and, therefore, that the region A of the output frame 122 should not be relied upon despite its low noise. Accordingly, based on the high temporal variance, the noise of the region A of the output frame 122, and/or the noise of the input frame corresponding to the output frame 124 (e.g., a noise level of 5), the temporal noise reduction model 114 calculates a low blending ratio of 0.1 to be used when blending region A of the input frame corresponding to the output frame 124 and region A of the output frame 122 to generate the region A of the output frame 124. Specifically, this results in the region A of the output frame 122 being weighted 0.1 and the region A of the input frame corresponding to the output frame 124 being weighted 0.9 during blending in order to generate the region A of the output frame 124.

As a result of the heavily weighting a single frame or portion of a frame, the output frame or corresponding portion of the output frame will have a level of noise that is similar to or substantially the same as the noise existing in the single frame or portion of the frame. For example, by heavily weighting the region A of the input frame corresponding to the output frame 124 during the generation of the region A of the output frame 126, the region A of the output frame 124 has a noise level of 5 due to the region A of the input frame corresponding to the output frame 124 also having a noise level of 5. The region A of the output frame 124 having a noise level of 5 indicates, for example, very high noise among the pixels in the region A of the output frame 124.

With respect to the generation of the output frame 126, there exists a low temporal variance between the region A of an input frame corresponding to the output frame 126 and the region A of the output frame 124. The low temporal variance indicates that there has been little change in the pixels of the region A between the time $T_1$ and the time $T_2$, and, therefore, that the region A of the output frame 124 can be relied upon despite its very high noise. Accordingly, based on the low temporal variance, the noise of the region A of the output frame 124 (e.g., a noise level of 5), and/or the noise of the input frame corresponding to the output frame 124 (e.g., a noise level of 5), the temporal noise reduction model 114 calculates a blending ratio of 0.5 to be used when blending region A of the input frame corresponding to the output frame 126 and region A of the output frame 124 to generate the region A of the output frame 126. Specifically, this results in the region A of the output frame 124 being weighted 0.5 and the region A of the input frame corresponding to the output frame 126 being weighted 0.5 during blending in order to generate the region A of the output frame 126. This balanced weighting may indicate that the noise of the region A of the input frame is the same or substantially the same as the noise of the region A of the output frame 124.

As a result of balancing the weighting of the previous output and the input frame or portions thereof, the output frame or corresponding portion of the output frame will have a level of noise level that is different from the previous output and the input frame, or the portions thereof. For example, by balancing the weighting between the region A of the input frame corresponding to the output frame 126 and the region A of the output frame 124 during the generation of the region A of the output frame 126, the region A of the output frame 126 has a noise level of 3 that is greatly improved over the noise level of 5 of the region A of the output frame 124 and the noise level of 5 of the region A of the input frame corresponding to the output frame 126. The region A of the output frame 126 having a noise level of 3 indicates, for example, medium noise among the pixels in the region A of the output frame 126.

With respect to the generation of the output frame 128, there again exists a low temporal variance between the region A of an input frame corresponding to the output frame 128 and the region A of the output frame 126. The low temporal variance indicates that there has been little change in the pixels of the region A between the time $T_2$ and the time $T_3$, and, therefore, that the region A of the output frame 126 can be relied upon. Accordingly, based on the low temporal variance, the noise of the region A of the output frame 124 (e.g., a noise level of 3), and/or the noise of the input frame corresponding to the output frame 124 (e.g., a noise level of 5), the temporal noise reduction model 114 calculates a blending ratio of 0.7 to be used when blending region A of the input frame corresponding to the output frame 128 and region A of the output frame 126 to generate the region A of the output frame 128. Specifically, this results in the region A of the output frame 126 being weighted 0.7 and the region A of the input frame corresponding to the output frame 128 being weighted 0.3 during blending in order to generate the region A of the output frame 128. This weighting accounts for the region A of the output frame 126 having significantly lower noise than the noise level of 5 of the region A of the input frame corresponding to the output frame 128.

As an example, in selecting a blending ratio of 0.7 for the generation of the region A of the output frame 128, the region A of the output frame 128 has a noise level of 1 that is significantly improved over the noise level of 3 of the region A of the output frame 126 and the noise level of 5 of the region A of the input frame corresponding to the output frame 126. The region A of the output frame 128 having a noise level of 1 indicates, for example, very little noise among the pixels in the region A of the output frame 128.

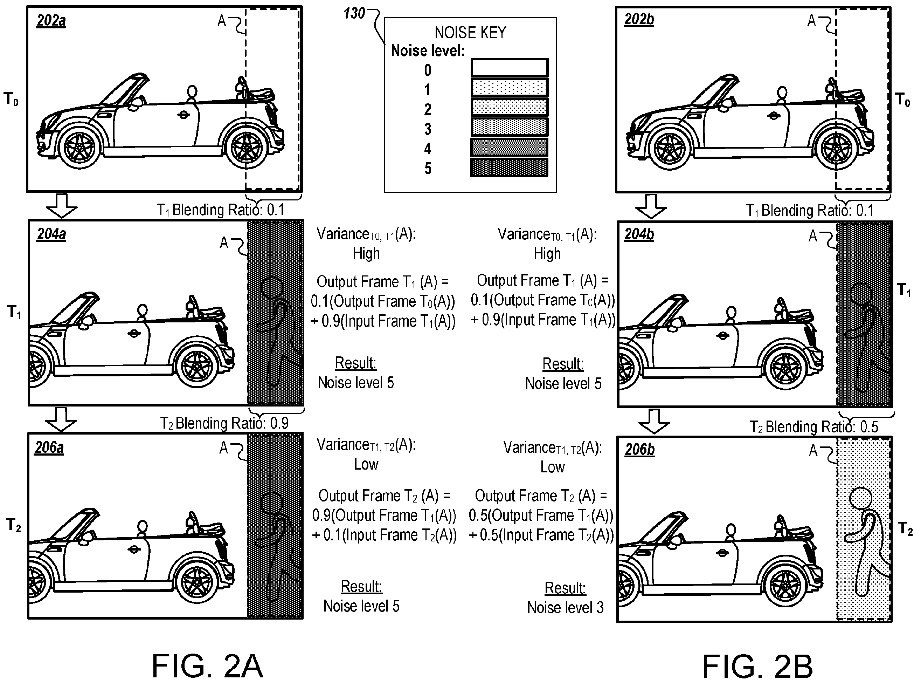

FIGS. 2A and 2B show different examples of noise reductions, illustrating how leveraging a filter that takes into account the noise variance of the previous frame can provide a better result. In the example of FIG. 2A, the process assumes that the previous output has relatively low noise, and as a result the noise reduction processing relies too heavily on a noisy prior frame that is noisy, and so perpetuates noise over multiple frames. In short, typical temporal noise reduction (TNR) does not typically account for how noisy the previous output was, and this can lead to propagating high levels of noise unnecessarily into future frames. On the other hand, the example of FIG. 2B does take into account noise variance of the previous frame and as a result is able to take into account the noise in a prior frame. In response to the detected noise, the FIG. 2B example sets a more appropriate blend ratio, which reduces the image noise in later frames to a greater extent and more quickly than what is shown in FIG. 2A.

FIG. 2A is a diagram that illustrates an existing approach to using a filter for temporal noise reduction.

As shown, there are three output frames 202a, 204a, and 206a that have been generated using an existing filter. The output frame 202a corresponds to a time $T_0$, the output frame 204a corresponds to the time $T_1$, and the output frame 206a corresponds to the time $T_2$. In generating the output frames 202a, 204a, and 206a, the existing filter may take into account temporal variance between the frames.

For example, in generating the output frame 204a, the existing filter takes into account the temporal variance existing between the previous output frame, the output frame 202a, and an input frame corresponding to the output frame 204a. Specifically, the existing filter may take into account the high temporal variance ($Variance_{T_0, T_1}(A)$) between the region A of the output frame 202a (Output Frame $T_0(A)$) and the region A of the input frame corresponding to the output frame 204a (Input Frame $T_1(A)$) in determining a low blending ratio of 0.1 ($T_1$ Blending Ratio) for generating the region A of the output frame 204a (Output Frame $T_1(A)$). Accordingly, the existing filter applies a weight of 0.1 to the Output Frame $T_0$(A) and a weight of 0.9 to the Input Frame $T_1(A)$ to generate the Output Frame $T_1(A)$. This results in the Output Frame $T_1(A)$ having a noise level that is similar to or substantially the same as the noise level of the Input Frame $T_1(A)$. Specifically, as a result of the Input Frame $T_1(A)$ having a noise level of 5, the noise level of the Output Frame $T_1(A)$ is also 5.

Similarly, in generating the output frame 206a, the existing filter takes into account the temporal variance existing between the previous output frame, the output frame 204a, and an input frame corresponding to the output frame 206a. Specifically, the existing filter may take into account the low temporal variance ($Variance_{T_1, T_2}(A)$) between the region A of the output frame 204a (Output Frame $T_1(A)$) and the region A of the input frame corresponding to the output frame 206a (Input Frame $T_2(A)$) in determining a high blending ratio of 0.9 ($T_2$ Blending Ratio) for generating the region A of the output frame 206a (Output Frame $T_2(A)$). Accordingly, the existing filter applies a weight of 0.9 to the Output Frame $T_1(A)$ and a weight of 0.1 to the Input Frame $T_2(A)$ to generate the Output Frame $T_2(A)$. This results in only a slight improvement to the noise level of the Output Frame $T_2(A)$ as the $T_2$ Blending Ratio significantly limits the contribution by the Input Frame $T_1(A)$. Accordingly, the Output Frame $T_2(A)$ has a noise level that is similar to or substantially the same as the noise level of the Output Frame $T_a(A)$. Specifically, as a result of the Output Frame $T_1(A)$ having a noise level of 5, the noise level of the Output Frame $T_2(A)$ is also 5.

**EP 4 189 634 B1**

FIG. 2B is a diagram that illustrates using a filter for temporal noise reduction. By using the filter, when compared to using the existing filter as demonstrated in FIG. 2A, the image quality of the output frames can be improved and/or improved more quickly.

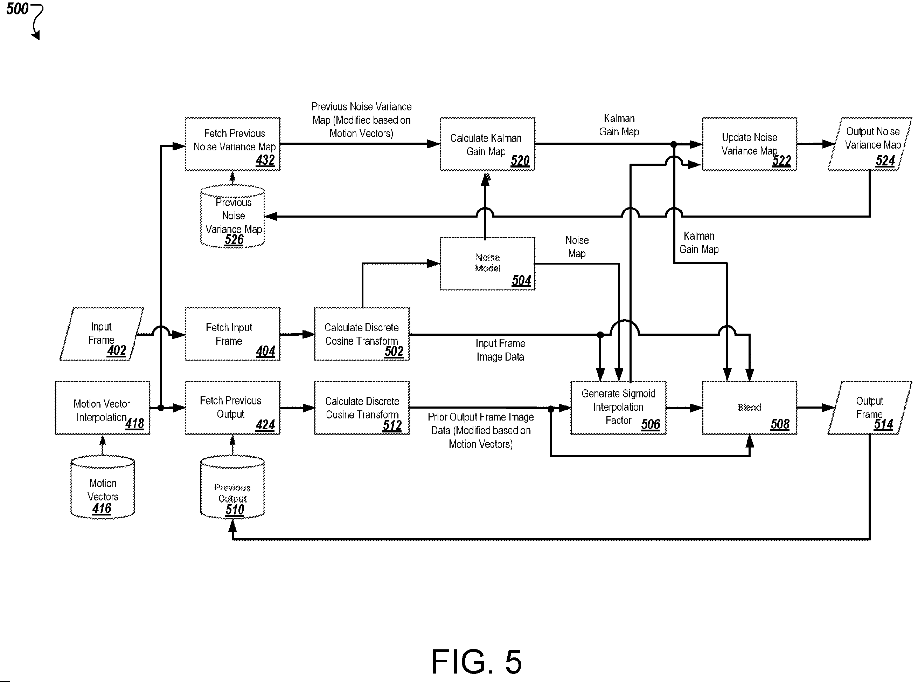

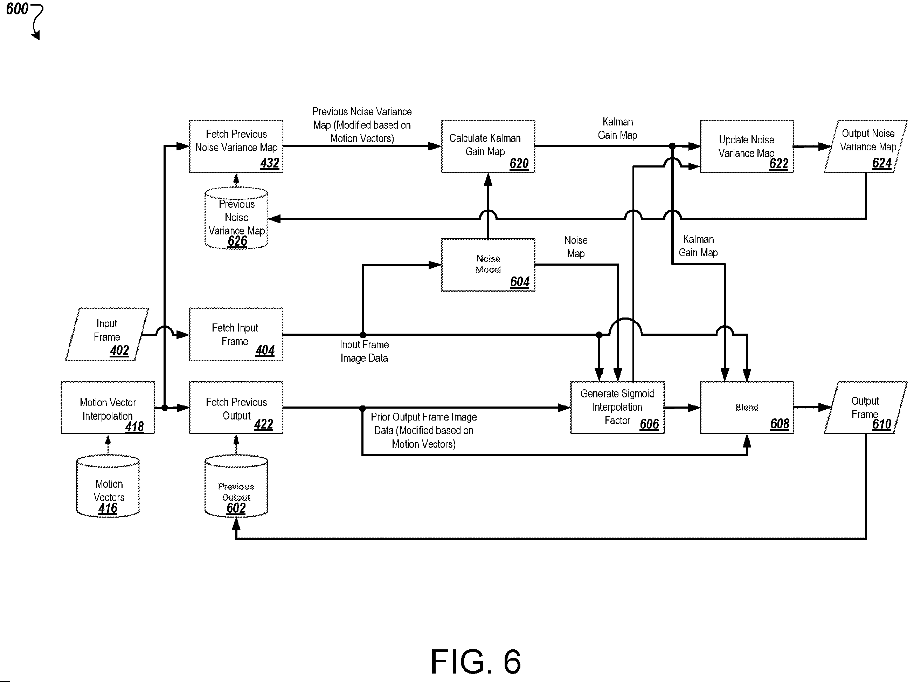

The filter can be any of the various filters of the examples herein, such as, the filter 110 of FIG. 1, the filter 400 of FIG. 4, the filter 500 of FIG. 5, or the filter 600 of FIG. 6.

As shown, there are three output frames 202b, 204b, and 206b that have been generated using the filter. The output frame 202b corresponds to a time $T_0$, the output frame 204b corresponds to the time $T_1$, and the output frame 206b corresponds to the time $T_2$. In generating the output frames 202b, 204b, and 206b, the filter may take into account temporal variance between the frames in addition to the noise of the corresponding input frames and/or the noise of the immediately preceding output frame.

For example, in generating the output frame 204b, the filter takes into account the temporal variance existing between the previous output frame, the output frame 202b, and an input frame corresponding to the output frame 204b, in addition to the noise of the input frame corresponding to the output frame 204b and/or the noise of the output frame 202b. Specifically, the filter may take into account the high temporal variance ($Variance_{T0, T1}(A)$) between the region A of the output frame 202b (Output Frame $T_0(A)$) and the region A of the input frame corresponding to the output frame 204b (Input Frame $T_1(A)$), the noise level of the Output Frame $T_0(A)$ (e.g., a noise level of 0 as shown), and/or the noise level of the Input Frame $T_1(A)$ (e.g., a noise level of 5) in determining a low blending ratio of 0.1 ($T_1$ Blending Ratio) for generating the region A of the output frame 204a (Output Frame $T_1(A)$). Accordingly, the existing filter applies a weight of 0.1 to the Output Frame $T_0(A)$ and a weight of 0.9 to the Input Frame $T_1(A)$ to generate the Output Frame $T_1(A)$. This results in the Output Frame $T_1(A)$ having a noise level that is similar to or substantially the same as the noise level of the Input Frame $T_1(A)$. Specifically, as a result of the Input Frame $T_1(A)$ having a noise level of 5, the noise level of the Output Frame $T_1(A)$ is also 5.

In generating the output frame 206b, the filter again takes into account the temporal variance existing between the previous output frame, the output frame 204b, and an input frame corresponding to the output frame 206b, in addition to the noise of the input frame corresponding to the output frame 206b and/or the noise of the output frame 204b. Specifically, the filter may take into account the low temporal variance ($Variance_{T1, T2}(A)$) between the region A of the output frame 204b (Output Frame $T_1(A)$) and the region A of the input frame corresponding to the output frame 206b (Input Frame $T_2(A)$), the noise level of the Output Frame $T_1(A)$ (e.g., a noise level of 5 as shown), and/or the noise level of the Input Frame $T_1(A)$ (e.g., a noise level of 5) in determining a blending ratio of 0.5 ($T_2$ Blending Ratio) for generating the region A of the output frame 206b (Output Frame $T_2(A)$). Accordingly, the existing filter applies a weight of 0.5 to the Output Frame $T_1(A)$ and a weight of 0.5 to the Input Frame $T_2(A)$ to generate the Output Frame $T_2(A)$. This results in a significant improvement to the noise level of the Output Frame $T_2(A)$ as the $T_2$ Blending Ratio balances the contributions by the Output Frame $T_1(A)$ and the Input Frame $T_2(A)$ to account for their similar noise levels. Specifically, as a result of balancing the contributions of the Output Frame $T_1(A)$ and the Input Frame $T_2(A)$ each having a noise level of 5, a noise level of 3 is achieved in the Output Frame $T_2(A)$.

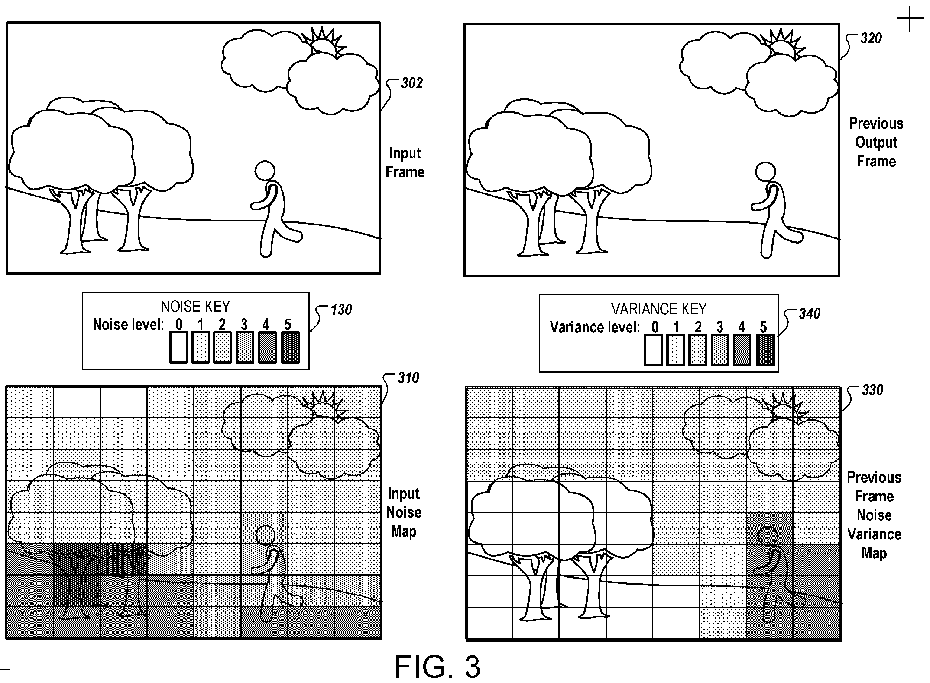

FIG. 3 is an example diagram that illustrates two frames and their corresponding noise maps. These include an input frame 302 and a corresponding input noise map 310, as well as a previous output frame 320 and its corresponding previous noise variance map 330. The input noise map 310 and the previous noise variance map 330 can both be two-dimensional maps or matrices.

The input frame 302 shows a person outside walking towards a group of trees. The input frame 302 may be provided to a filter as input. For example, with respect to FIG. 1, the input frame 302 can be the input image data 112 of the filter 110.

The input noise map 310 corresponds to the input frame 302 and depicts the noise (e.g., the spatial noise) that exists in the input frame 302. As shown, the input noise map 310 overlays the input frame 302 to demonstrate the noise identified for different regions of pixels in the input frame 302. Each of these regions may represent a block of pixels (e.g., a block of 16X16 pixels). The noise level (e.g., value) assigned to each block of pixels may represent the estimated noise among the pixels in the respective block of pixels. As an example, the noise level may increase, indicating increased spatial noise, in low light regions of the input frame 302, such as under the foliage of the group of trees.

With respect to FIG. 1, the filter 110 may generate the input noise map 310 by estimating and/or measuring the average noise level among the pixels in each block of pixels of the input frame 302. These noise levels (e.g., values) may be stored in a matrix as the input noise map 310. For example, the input noise map 310 can be represented by the following matrix:

8

$$\begin{bmatrix} 1, 0, 0, 1, 2, 2, 2, 2 \\ 1, 1, 1, 1, 2, 2, 2, 2 \\ 1, 2, 1, 1, 2, 2, 2, 2 \\ 2, 2, 2, 2, 2, 2, 2, 2 \\ 2, 2, 2, 2, 2, 3, 2, 2 \\ 4, 5, 5, 3, 2, 3, 2, 2 \\ 4, 5, 4, 4, 3, 3, 3, 3 \\ 4, 4, 4, 4, 3, 4, 4, 4 \end{bmatrix}$$

The input noise map 310 may be stored in memory, e.g., of the computing device 102.

In some cases, the input noise map 310 is pre-computed. For example, instead of generating the input noise map 310 or generating the input noise map 310 at this time, the filter 110 may access, e.g., from the memory of the computing device 102, the input noise map 310 that was previously computed.

Similar to the input frame 302, the previous output frame 320 shows a person outside walking towards a group of trees. When compared to the input frame 302, the person in the previous output frame 320 is closer to the right-edge of the frame, e.g., indicating that the person is moving from right to left towards the group of trees. The previous output frame 320 may be generated by a filter as output. For example, with respect to FIG. 1, the previous output frame 320 can be the output image data 120 of the filter 110.

The previous noise variance map 330 corresponds to the previous output frame 320. For example, with respect to FIG. 1, the previous noise variance map 330 may be the previous noise variance map 116 that corresponds to the previous output 118. As shown, the previous noise variance map 330 overlays the previous output frame 320 and provides multiple variance levels (e.g., values) that correspond to different regions of an image (e.g., the output frame 320). Each of these regions may represent a block of pixels (e.g., a block of 16X16 pixels). The previous noise variance map 330 variance may depict the variance between an output frame immediately preceding the previous output frame 320 and an input frame immediately preceding the input frame 302, such as, for example, the temporal difference between the two frames and/or the difference in spatial noise between the two frames. The previous noise variance map 330 may additionally or alternatively account for the change in variance from a variance map immediately preceding the previous noise variance map 330. Specifically, the previous noise variance map 330 may represent the spatially varying variance change with frame-by-frame progress of temporal noise reduction. That is, the previous noise variance map 330 may represent the estimated noise across different portions of the previous output frame 320 that, for example, takes into account the noise variance of an output frame immediately preceding the previous output frame 320, a noise model output based on an input frame immediately preceding the input frame 302, and the amount and location of change in the scene between the output frame immediately preceding the previous output frame 320 and the input frame immediately preceding the input frame 302. Accordingly, each of the values in the previous noise variance map 330 may correspond to a particular group of pixels (e.g., a block of pixels) in the previous output frame 320.

The previous noise variance map 330 can be based on a prior variance (e.g., a variance map immediately preceding the previous noise variance map 330), the noise of input image data immediately preceding the input frame 302, and the temporal difference between a prior output frame (e.g., an output frame immediately preceding the output frame 320) and the input frame immediately preceding the input frame 302. Accordingly, the previous noise variance map 330 can account for changes in variance, the temporal difference between the prior output frame (e.g., an output frame immediately preceding the output frame 320) and the input frame immediately preceding the input frame 302, and the spatial noise of the input frame immediately preceding the input frame 302. For example, the filter used to generate the previous output frame 320 and the previous noise variance map 330 can generate a new variance map corresponding to the output frame 320 by updating the previous noise variance map 330 using the estimated noise (e.g., estimated spatial noise) in the input frame 302, the previous noise variance map 330, and the temporal difference existing between the input frame 302 and the previous output frame 320.

The previous noise variance map 330 may be accessed by the filter 110 from memory. For example, the filter 110 may access the previous noise variance map 330 from memory of the computing device 102.

A region in the previous noise variance map 330 that has a larger variance (e.g., a block assigned with a variance level of 3, 4, or 5) may indicate one or more of that there was a significant change in variance with respect to the region when compared to a variance map immediately preceding the previous noise variance map 330, that there was significant temporal difference in the region between an output frame immediately preceding the output frame 320 and an input frame immediately preceding the input frame 302 (e.g., as a result of the person moving into and/or out of the region between frames), and/or that there was significant spatial noise in the region in the input frame immediately preceding the input frame 302 (e.g., as a result of low light conditions in the region).

As an example, the previous noise variance map 330 can be represented by the following matrix:

$$\begin{bmatrix} 2, 2, 2, 2, 2, 2, 2, 2 \\ 2, 2, 2, 2, 2, 2, 2, 2 \\ 2, 2, 2, 2, 2, 2, 2, 2 \\ 0, 0, 0, 0, 2, 2, 2, 2 \\ 0, 0, 0, 0, 2, 2, 4, 2 \\ 0, 0, 0, 0, 2, 1, 4, 4 \\ 0, 0, 0, 0, 0, 1, 4, 4 \\ 0, 0, 0, 0, 0, 2, 4, 4 \end{bmatrix}$$

The filter can use the previous noise variance map 330 and the input noise map 310 to generate a Kalman gain map. Like the previous noise variance map 330 and the input noise map 310, the Kalman gain map can be a two dimensional map. Similarly, like the previous noise variance map 330 and the input noise map 310, the Kalman gain map can be a matrix. As an example, as will be described in more detail below in FIG. 4, the Kalman gain map can be represented by the following equation where the previous noise variance map 330 is represented by $P_{t-1}$ and the input noise map 310 is represented by $\sigma^2$:

$$K_{max,t} = 1 - P_{t-1} / (P_{t-1} + \sigma^2)$$

The filter may use the Kalman gain map to blend regions of the input frame 302 with the previous output frame 320. For example, the filter may use the Kalman gain map to calculate a blending ratio for each pixel block of the previous output frame 320 to blend with a corresponding pixel block of the input frame 302.

FIG. 4 is a block diagram illustrating a filter 400 for temporal noise reduction. The filter 400 is a Laplacian pyramid based temporal noise reduction filter. The filter 400 receives an input frame 402 and generates an output frame 428 using a stored previous output 420, stored motion vectors 416, a stored previous noise variance map 430, and the input frame 402.

As shown, the filter 400 performs motion vector interpolation 418 using stored motion vectors 416. The motion vectors 416 can indicate the direction of movement of pixels (or blocks of pixels) between two or more frames, such as, for example, the direction of movement of pixels (or blocks of pixels) between the previous output 420 and the input frame 402. The motion vectors 416 can, therefore, indicate a direction of movement of objects in the frame(s) and/or a direction of movement of the camera used to capture the frame(s). As an example, the output of the motion vector interpolation 418 can include multiple interpolated motion vectors that may indicate how the pixels (or blocks of pixels) in the previous output 420 have likely moved since the previous output 420 was generated, and, therefore, may indicate the likely current locations of the pixels (or blocks of pixels) in the input frame 402. These interpolated motion vectors may be used, for example, to identify, for blocks of pixels in the previous output 420, corresponding blocks of pixels in the input frame 402. As an example, as will be described in more detail below, when blending the previous output 420 with the input frame 402, a given block of pixels in the input frame 402 will only be blended with its corresponding block of pixels in the previous output 420 (if it exists).

The filter 400 performs a fetch 404 of the input frame 402. Similarly, the filter 400 performs a fetch 422 of the previous output 420 that the filter 400 has stored. The fetch 422 also includes acquiring the output of the motion vector interpolation 418. In addition, the filter 400 performs a fetch 432 of the previous noise variance map 430 that the filter 400 has stored. The previous noise variance map 430 can be a previous variance map, such as the previous noise variance map 330 shown in FIG. 3. The previous noise variance map 430 can indicate, for example, the spatially varying variance change with frame-by-frame progress of temporal noise reduction by the filter 400. That is, the previous noise variance map 430 may represent the estimated noise across different portions of the previous output frame 420. The fetch 432 also includes acquiring the output of the motion vector interpolation 418.

Using the fetched input frame 402, the filter 400 calculates a Gaussian pyramid 406 to produce a multi-scale representation of the input frame 402. The filter 400 proceeds to use the generated Gaussian pyramid 406 to calculate a Laplacian pyramid 408 that corresponds to the input frame 402.

The filter 400 provides the Gaussian pyramid 406 to a noise model 410. The noise model 410 uses the Gaussian pyramid 406 to estimate the noise (e.g., spatial noise) in the input frame 402.

Using the fetched previous output 420 and the interpolated motion vectors, the filter 400 calculates a Gaussian pyramid 424 to produce a multi-scale representation of the previous output 420. The filter 400 proceeds to use the generated Gaussian pyramid 424 to calculate a Laplacian pyramid 426 that corresponds to the previous output 420.

The filter 400 uses the Laplacian pyramid 408 corresponding to the input frame 402, the Laplacian pyramid 426 corresponding to the previous output 420, and the noise estimate of the input frame 402 to generate a Sigmoid interpolation factor 412. Generating the Sigmoid interpolation factor 412 may include calculating a temporal difference measure for each position within the input frame 402 and the previous output 420. As an example, the temporal difference measure can be a sum of absolute difference. The temporal difference measure may be calculated using the interpolated motion vectors. The Sigmoid interpolation factor 412 may be generated using the following formula where "a" is a threshold, "b" is a transition gain, and "d" is the temporal difference measure:

$$K_t = sigmoid(d, a, b) = 1.0 - 1.0 / (1.0 + exp(-b * (d - a)))$$

The Sigmoid interpolation factor 412 (Kt) can be a two-dimensional map. Similarly, the temporal difference measure (d) can be a two-dimensional map.

The filter 400 uses the estimated noise of the input frame 402 generated by the noise model 410 and the previous noise variance map 430 to calculate a Kalman gain map 434. The Kalman gain map 434 can indicate the maximum Kalman gain. The Kalman gain map 434 can be a two-dimensional map. Each value in the Kalman gain may correspond to a block of pixels (e.g., a block of pixels of the input frame 402). The Kalman gain map 434 can be calculated using the following equation where $P_{t-1}$ represents the previous noise variance map 430, $\sigma^2$ represents the noise estimate of the input frame 402, and "t" represents the current frame number:

$$K_{max,t} = 1 - P_{t-1} / (P_{t-1} + \sigma^2)$$

The filter 400 uses the Kalman gain map 434, the Laplacian pyramid 408 corresponding to the input frame 402, the Laplacian pyramid 426 corresponding to the previous output 420, and the Sigmoid interpolation factor 412 to perform a blend 414 of the input frame 402 with the previous output 420. In performing the blend 414 of the input frame 402 with the previous output 420, the filter 400 generates the output frame 428. For example, the blend 414 of the input frame 402 with the previous output 420 may generate a Laplacian pyramid. The filter 400 can proceed to construct the output frame 428 from the generated Laplacian pyramid.

The blend 414 can be performed using the following formula where $I_{out}$ represents the output frame 428 (or a Laplacian pyramid of the output frame 428), $I_{in}$ represents the Laplacian pyramid 408, $I_{prev}$ represents the Laplacian pyramid 426, $K_t$ represents the Sigmoid interpolation factor 412, $K_{max,t}$ represents the Kalman gain map 434, and $w_{in}$ represents a user parameter to control the weight of the input frame 402:

$$I_{out} = w_{in} * I_{in} + (1.0 - w_{in}) * (K_t * K_{max,t} (I_{prev} - I_{in}) + I_{in})$$

The filter 400 can store the output frame 428, e.g., to be later used as a previous output for the next input frame. In storing the output frame 428, the filter 400 may replace the previous output 420 with the output frame 428.

The filter 400 can use the Kalman gain map 434 and the sigmoid interpolation factor 412 to perform an update 436 of the previous noise variance map 430 to generate an output noise variance map 438. The output noise variance map 438 can be a two-dimensional map. The formula for generating the output noise variance map 438 (Pt) is provided below where $K_t$ represents the Sigmoid interpolation factor 412, $K_{max,t}$ represents the Kalman gain map 434, $\sigma^2$ represents the noise estimate of the input frame 402, "t" represents the current frame number, $P_{t-1}$ represents the previous noise variance map 430, and "a" represents a temporal smoothing factor having a value between 0 and 1:

$$P_t = a * P_{t-1} + (1 - a) * (P_{t-1} + (1 - (1 - w_{in}) K_t)^2 \sigma^2) K_{max,t}$$

In the above formula, the term $(P_{t-1} + (1 - (1 - w_{in}) K_t)^2 \sigma^2) K_{max,t}$ is used to update the previous noise map 430 (e.g., variance map) by reducing the Kalman maximum gain, and by resetting to input noise estimate (e.g., to the noise estimate of the input frame 402 generated by the noise model 410).

The filter 400 can store the output noise variance map 438, e.g., to be later used as a previous noise map for the next input frame. In storing the output noise variance map 438, the filter 400 may replace the previous noise variance map 430 with the output noise variance map 438.

Although the filter 400 was described as processing the entirety of the input frame 402 at once, the filter 400 may alternatively process the input frame 402 pixel block by pixel block or, in some implementations, pixel by pixel.

FIG. 5 is a block diagram illustrating a filter 500 for temporal noise reduction. The filter 500 is a frequency based temporal noise reduction filter, e.g., a discrete cosine transform based temporal noise reduction filter. The filter 500 receives an input frame 402 and generates an output frame 514 using a stored previous output 510, stored motion vectors 416, a stored previous noise variance map 526, and the input frame 402.

As shown, the filter 500 performs motion vector interpolation 418 using stored motion vectors 416. The motion vectors 416 can indicate the direction of movement of pixels (or blocks of pixels) between two or more frames, such as, for example, the direction of movement of pixels (or blocks of pixels) between the previous output 510 and the input frame 402.

The motion vectors 416 can, therefore, indicate a direction of movement of objects in the frame(s) and/or a direction of movement of the camera used to capture the frame(s). As an example, the output of the motion vector interpolation 418 can include multiple interpolated motion vectors that may indicate how the pixels (or blocks of pixels) in the previous output 510 have likely moved since the previous output 510 was generated, and, therefore, may indicate the likely current locations of the pixels (or blocks of pixels) in the input frame 402. These interpolated motion vectors may be used, for example, to identify, for blocks of pixels in the previous output 510, corresponding blocks of pixels in the input frame 402. As an example, as will be described in more detail below, when blending the previous output 510 with the input frame 402, a given block of pixels in the input frame 402 will only be blended with its corresponding block of pixels in the previous output 510 (if it exists).

The filter 500 performs a fetch 404 of the input frame 402. Similarly, the filter 500 performs a fetch 422 of the previous output 510 that the filter 500 has stored. The fetch 422 also includes acquiring the output of the motion vector interpolation 418. In addition, the filter 500 performs a fetch 432 of the previous noise variance map 526 that the filter 500 has stored. The previous noise variance map 526 can be a previous variance map, such as the previous noise variance map 330 shown in FIG. 3. The previous noise variance map 526 can indicate, for example, the spatially varying variance change with frame-by-frame progress of temporal noise reduction by the filter 500. That is, the previous noise variance map 526 may represent the estimated noise across different portions of the previous output frame 510. The fetch 432 also includes acquiring the output of the motion vector interpolation 418.

Using the fetched input frame 402, the filter 500 calculates a discrete cosine transform 502 of the input frame 402. The filter 500 proceeds to provide the discrete cosine transform 502 to a noise model 504. The noise model 504 uses the discrete cosine transform 502 to estimate the noise (e.g., spatial noise) in the input frame 402.

Using the fetched previous output 510 and the interpolated motion vectors, the filter 400 calculates a discrete cosine transform 512 of the previous output 510.

The filter 500 uses the discrete cosine transform 502 corresponding to the input frame 402, the discrete cosine transform 512 corresponding to the previous output 510, and the noise estimate of the input frame 402 to generate a Sigmoid interpolation factor 506. Generating the Sigmoid interpolation factor 506 may include calculating a temporal difference measure for each position within the input frame 402 and the previous output 510. As an example, the temporal difference measure can be a sum of absolute difference. The temporal difference measure may be calculated using the interpolated motion vectors. The Sigmoid interpolation factor 506 may be generated using the following formula where "a" is a threshold, "b" is a transition gain, and "d" is the temporal difference measure:

$$K_t = sigmoid(d, a, b) = 1.0 - 1.0 / (1.0 + exp(-b * (d - a)))$$

The Sigmoid interpolation factor 506 ($K_t$) can be a two-dimensional map. Similarly, the temporal difference measure (d) can be a two-dimensional map.

The filter 500 uses the estimated noise of the input frame 402 generated by the noise model 504 and the previous noise variance map 526 to calculate a Kalman gain map 520. The Kalman gain map 520 can indicate the maximum Kalman gain. The Kalman gain map 520 can be a two-dimensional map. Each value in the Kalman gain may correspond to a block of pixels (e.g., a block of pixels of the input frame 402). The Kalman gain map 520 can be calculated using the following equation where $P_{t-1}$ represents the previous noise variance map 526, $\sigma^2$ represents the noise estimate of the input frame 402, and "t" represents the current frame number:

$$K_{max,t} = 1 - P_{t-1} / (P_{t-1} + \sigma^2)$$

The filter 500 uses the Kalman gain map 520, the discrete cosine transform 502 corresponding to the input frame 402, the discrete cosine transform 512 corresponding to the previous output 510, and the Sigmoid interpolation factor 506 to perform a blend 508 of the input frame 402 with the previous output 510. In performing the blend 508 of the input frame 402 with the previous output 510, the filter 500 generates the output frame 514. For example, the blend 508 of the input frame 402 with the previous output 510 may generate a discrete cosine transform. The filter 500 can proceed to construct the output frame 514 from the generated discrete cosine transform.

The blend 508 can be performed using the following formula where $I_{out}$ represents the output frame 514 (or a discrete cosine transform of the output frame 514), $I_{in}$ represents the discrete cosine transform 502, $I_{prev}$ represents the discrete cosine transform 512, $K_t$ represents the Sigmoid interpolation factor 506, $K_{max,t}$ represents the Kalman gain map 520, and $w_{in}$ represents a user parameter to control the weight of the input frame 402:

$$I_{out} = w_{in} * I_{in} + (1.0 - w_{in}) * (K_t * K_{max,t} (I_{prev} - I_{in}) + I_{in})$$

The filter 500 can store the output frame 514, e.g., to be later used as a previous output for the next input frame. In storing the output frame 514, the filter 500 may replace the previous output 510 with the output frame 514.

The filter 500 can use the Kalman gain map 520 and the sigmoid interpolation factor 506 to perform an update 522 of the previous noise variance map 526 to generate an output noise variance map 524. The output noise variance map 524 can be a two-dimensional map. The formula for generating the output noise variance map 524 ($P_t$) is provided below where $K_t$ represents the Sigmoid interpolation factor 506, $K_{max,t}$ represents the Kalman gain map 520, $\sigma^2$ represents the noise estimate of the input frame 402, "t" represents the current frame number, $P_{t-1}$ represents the previous noise variance map 526, and "a" represents a temporal smoothing factor having a value between 0 and 1:

$$P_t = a * P_{t-1} + (1 - a) * (P_{t-1} + (1 - (1 - w_{in}) K_t)^2 \sigma^2) K_{max,t}$$

In the above formula, the term $(P_{t-1} + (1 - (1 - w_{in}) K_t)^2 \sigma^2) K_{max,t}$ is used to update the previous noise variance map 526 (e.g., variance map) by reducing the Kalman maximum gain, and by resetting to input noise estimate (e.g., to the noise estimate of the input frame 402 generated by the noise model 504).

The filter 500 can store the output noise variance map 524, e.g., to be later used as a previous noise map for the next input frame. In storing the output noise variance map 524, the filter 500 may replace the previous noise variance map 526 with the output noise variance map 524.

Although the filter 500 was described as processing the entirety of the input frame 402 at once, the filter 500 may alternatively process the input frame 402 pixel block by pixel block or, in some implementations, pixel by pixel.

FIG. 6 is a block diagram illustrating a filter 600 for temporal noise reduction. The filter 600 is a single scale spatial based temporal noise reduction filter. The filter 600 receives an input frame 402 and generates an output frame 610 using a stored previous output 420, stored motion vectors 416, a stored previous noise variance map 430, and the input frame 402.

As shown, the filter 600 performs motion vector interpolation 418 using stored motion vectors 416. The motion vectors 416 can indicate the direction of movement of pixels (or blocks of pixels) between two or more frames, such as, for example, the direction of movement of pixels (or blocks of pixels) between the previous output 602 and the input frame 402. The motion vectors 416 can, therefore, indicate a direction of movement of objects in the frame(s) and/or a direction of movement of the camera used to capture the frame(s). As an example, the output of the motion vector interpolation 418 can include multiple interpolated motion vectors that may indicate how the pixels (or blocks of pixels) in the previous output 602 have likely moved since the previous output 602 was generated, and, therefore, may indicate the likely current locations of the pixels (or blocks of pixels) in the input frame 402. These interpolated motion vectors may be used, for example, to identify, for blocks of pixels in the previous output 602, corresponding blocks of pixels in the input frame 402. As an example, as will be described in more detail below, when blending the previous output 602 with the input frame 402, a given block of pixels in the input frame 402 will only be blended with its corresponding block of pixels in the previous output 602 (if it exists).

The filter 600 performs a fetch 404 of the input frame 402. Similarly, the filter 600 performs a fetch 422 of the previous output 602 that the filter 600 has stored. The fetch 422 also includes acquiring the output of the motion vector interpolation 418. In addition, the filter 600 performs a fetch 432 of the previous noise variance map 626 that the filter 600 has stored. The previous noise variance map 626 can be a previous variance map, such as the previous noise variance map 330 shown in FIG. 3. The previous noise variance map 626 can indicate, for example, the spatially varying variance change with frame-by-frame progress of temporal noise reduction by the filter 600. That is, the previous noise variance map 626 may represent the estimated noise across different portions of the previous output 602. The fetch 432 also includes acquiring the output of the motion vector interpolation 418.

The filter 400 provides the fetched input frame 402 to a noise model 604. The noise model 604 uses the input frame 402 to estimate the noise (e.g., spatial noise) in the input frame 402.

The filter 600 uses the fetched input frame 402 (e.g., single scale image), the fetched previous output 602 (e.g., single scale image), the interpolated motion vectors, and the noise estimate of the input frame 402 to generate a Sigmoid interpolation factor 606. Generating the Sigmoid interpolation factor 606 may include calculating a temporal difference measure for each position within the input frame 402 and the previous output 602. As an example, the temporal difference measure can be a sum of absolute difference. The temporal difference measure may be calculated using the interpolated motion vectors. The Sigmoid interpolation factor 606 may be generated using the following formula where "a" is a threshold, "b" is a transition gain, and "d" is the temporal difference measure:

$$K_t = sigmoid(d, a, b) = 1.0 - 1.0 / (1.0 + \exp(-b * (d - a)))$$

The Sigmoid interpolation factor 606 ($K_t$) can be a two-dimensional map. Similarly, the temporal difference measure (d) can be a two-dimensional map.

The filter 600 uses the estimated noise of the input frame 402 generated by the noise model 604 and the previous noise variance map 626 to calculate a Kalman gain map 620. The Kalman gain map 620 can indicate the maximum Kalman gain. The Kalman gain map 620 can be a two-dimensional map. Each value in the Kalman gain may correspond to a block of pixels (e.g., a block of pixels of the input frame 402). The Kalman gain map 620 can be calculated using the following equation where $P_{t-1}$ represents the previous noise variance map 626, $\sigma^2$ represents the noise estimate of the input frame 402, and "t" represents the current frame number:

$$K_{max,t} = 1 - P_{t-1} / (P_{t-1} + \sigma^2)$$

The filter 600 uses the Kalman gain map 620, the input frame 402, the previous output 602, and the sigmoid interpolation factor 606 to perform a blend 608 of the input frame 402 with the previous output 602. In performing the blend 608 of the input frame 402 with the previous output 602, the filter 600 generates the output frame 610.

The blend 608 can be performed using the following formula where $I_{out}$ represents the output frame 610, $I_{in}$ represents the input frame 402, $I_{prev}$ represents the previous output 602, $K_t$ represents the Sigmoid interpolation factor 606, $K_{max,t}$ represents the Kalman gain map 620, and $w_{in}$ represents a user parameter to control the weight of the input frame 402:

$$I_{out} = w_{in} * I_{in} + (1.0 - w_{in}) * (K_t * K_{max,t} (I_{prev} - I_{in}) + I_{in})$$

The filter 600 can store the output frame 610, e.g., to be later used as a previous output for the next input frame. In storing the output frame 610, the filter 600 may replace the previous output 602 with the output frame 610.

The filter 600 can use the Kalman gain map 620 and the sigmoid interpolation factor 606 to perform an update 622 of the previous noise variance map 626 to generate an output noise variance map 624. The output noise variance map 624 can be a two-dimensional map. The formula for generating the output noise variance map 624 (Pt) is provided below where $K_t$ represents the Sigmoid interpolation factor 606, $K_{max,t}$ represents the Kalman gain map 620, $\sigma^2$ represents the noise estimate of the input frame 402, "t" represents the current frame number, $P_{t-1}$ represents the previous noise variance map 626, and "a" represents a temporal smoothing factor having a value between 0 and 1:

$$P_t = a * P_{t-1} + (1 - a) * (P_{t-1} + (1 - (1 - w_{in}) K_t)^2 \sigma^2) K_{max,t}$$

In the above formula, the term $(P_{t-1} + (1 - (1 - w_{in}) K_t)^2 \sigma^2) K_{max,t}$ is used to update the previous noise variance map 626 (e.g., variance map) by reducing the Kalman maximum gain, and by resetting to input noise estimate (e.g., to the noise estimate of the input frame 402 generated by the noise model 604).

The filter 600 can store the output noise variance map 624, e.g., to be later used as a previous noise map for the next input frame. In storing the output noise variance map 624, the filter 600 may replace the previous noise variance map 626 with the output noise variance map 624.

Although the filter 600 was described as processing the entirety of the input frame 402 at once, the filter 600 may alternatively process the input frame 402 pixel block by pixel block or, in some implementations, pixel by pixel.

The filters 100, 400, 500, and 600 described herein can be implemented in various forms. For example, the described filters can be implemented in software, e.g., that is running on a computing device such as a phone. The described filters can be implemented in hardware. The described filters can be implemented in an image processor or a system on a chip.

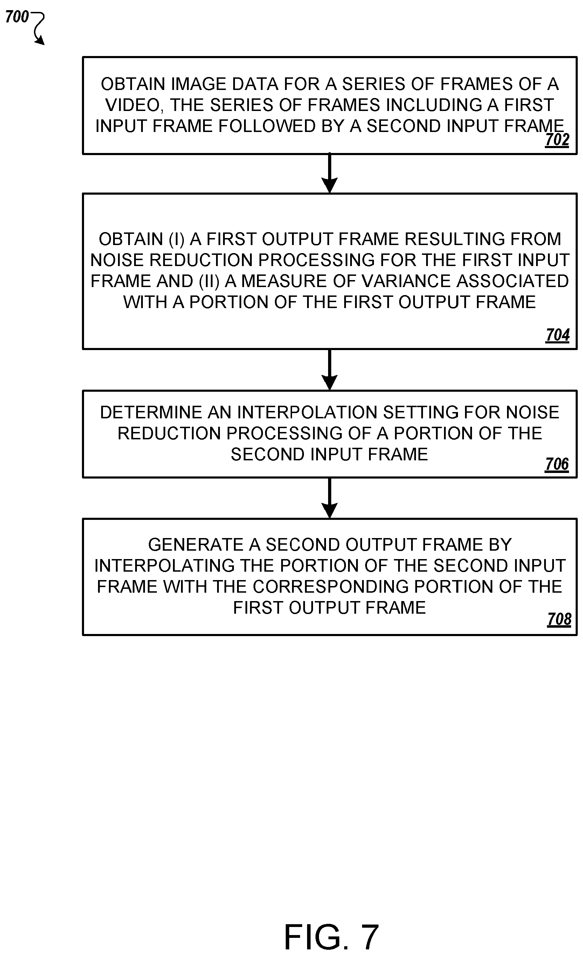

FIG. 7 is a flowchart showing an example process 700 for using a filter for temporal noise reduction. The process 700 can be performed using the filter 110 shown in FIG. 1. Similarly, the process 700 can be performed using the filter 400 shown in FIG. 4, the filter 500 shown in FIG. 5, and/or the filter 600 shown in FIG. 6.

The process 700 includes obtaining image data for a series of frames of a video, the series of frames including a first input frame followed by a second input frame (702). For example, with respect to FIG. 1, the camera module 104 can provide multiple input frames to the filter 110. The first input frame can be input image data immediately preceding the input image data 112. The first input frame may have been used by the filter 110 to generate the previous output 118. The second input frame can be the input image data 112.

The process 700 includes obtaining (i) a first output frame resulting from noise reduction processing for the first input frame and (ii) a measure of variance associated with a portion of the first output frame (704). For example, with respect to FIG. 1, the first output frame can be the previous output 118. The measure of variance associated with a portion of the first output frame can be the previous noise variance map 116.

In some cases, the measure of variance represents a variance between the portion of the first input frame and a corresponding portion of one or more previous input frames.

In some cases, the measure variance represents a variance between the portion of the first input frame and a corresponding portion of the first output frame.

In some cases, the measure of variance indicates the tracked spatially varying variance change with frame-by-frame progress of temporal noise reduction.

In some cases, the measure of variance is an estimation of noise across different portions of an output frame of a filter. The measure of variance for an output frame may be based on (i) the noise variance for a prior output frame (e.g., a prior output frame immediately preceding the output frame), (ii) the noise model output for the current input frame, and (iii) the amount and location of change in the scene covered by the current input frame. Where change in the scene may be the change in the scene between the prior output frame and the current input frame. As a result, the measure of variance may indicate the variation in noise to be expected across the output frame of the filter.

In some cases, the measure of variance accounts for the temporal difference between an output frame preceding the first output frame and the first input frame, the noise of the first input frame (e.g., spatial noise), and/or a change in variance between the measure of variance and previously determined measure of variance.

The process 700 includes determining an interpolation setting for noise reduction processing of a portion of the second input frame (706). The interpolation settings can be, for example, a Kalman gain (e.g., Kalman maximum gain), a Kalman gain map (e.g., a Kalman maximum gain map), a sigmoid interpolation factor multiplied by the Kalman gain map, or an overall blending ratio (e.g., calculated using a Kalman gain map and/or a sigmoid interpolation factor). The interpolation settings can be determined based on (i) a measure of noise for the portion of the second input frame and (ii) the measure of variance associated with a corresponding portion of the first output frame. For example, with respect to FIG. 4, the Kalman gain map 434 can be calculated using, for example, a noise estimate of at least a portion of the input frame 402 and the previous noise variance map 430.

The Kalman maximum gain can be determined by unity minus the quotient. Where the quotient is, for example, calculated by dividing a previous variance map by the sum of the previous variance map and the previous variance map and the noise variance estimate. For example, the Kalman maximum gain can be realized by the following formula where $P_{t-1}$ represents the previous variance corresponding to the first output frame, $\sigma^2$ represents the noise estimate of the second input frame, and "t" represents the current frame number:

$$K_{max,t} = 1 - P_{t-1} / (P_{t-1} + \sigma^2)$$

In some cases, determining an interpolation setting for noise reduction processing of the portion of the second input frame includes determining a sigmoid interpolation for the second input frame. For example, with respect to FIG. 6, the sigmoid interpolation factor 412 can be calculated using at least a portion of the input frame 402, at least a portion of the previous output 602, and a noise estimate for at least a portion of the input frame 402. Here, generating the second output frame can include interpolating the second input frame with the first output frame by an amount determined based on the Kalman maximum gain and the sigmoid interpolation factor.

In some cases, the sigmoid interpolation factor is determined based on a threshold, a transition gain value, and a temporal difference measure indicating differences between the portion of the second input frame and the corresponding portion of the first output frame. The portion of the second input frame may be a block of pixels. The portion of the first output frame may be a block of pixels that corresponds to the block of pixels of the second input frame, e.g., based on the location of the block of pixels and/or on motion vectors.

In some cases, the second input frames includes pixels. Here, the process 700 optionally includes determining different interpolation settings for interpolating different groups of pixels of the second input frame with corresponding groups of pixels of the first output frame. For example, multiple Kalman maximum gain values may be calculated where each value corresponds to a group of pixels (e.g., block of pixels) in the second input frame and an associated group of pixels in the first output frame.

In some cases, the second input frames includes pixels that are associated with blocks of pixels. Here, the process 700 optionally includes determining a matrix of interpolation settings. The matrix of interpolation settings may include multiple values where value corresponds to a particular block of pixels. For example, a Kalman gain map can be generated that includes a matrix of values. Each of the values in the Kalman gain map may correspond to a block of pixels in the second input frame and an associated block of pixels in the first output frame.

In some cases, determining the interpolation setting for noise reduction processing of the portion of the second input frame includes determining the interpolation setting for noise reduction processing of the portion of the second input frame based on the measure of variance. For example, with respect to FIG. 6, the Kalman gain map 620 is generated using the previous noise variance map 430, in addition to the noise estimate of the input frame 402. The Kalman gain map 620 is then used to blend at least a portion of the input frame 402 with at least a portion of the previous output 602 when generating at least a portion of the output frame 610.

In some cases, determining the interpolation setting includes determining a level of interpolation. For example, determining the level of interpolation can include determining a blending ratio based on a Kalman maximum gain map and a sigmoid interpolation factor.

In some cases, determining the level of interpolation includes determining a Kalman maximum gain, and determining the level of interpolation based on the Kalman maximum gain. For example, as discussed above with respect to FIGS. 4, 5, and 6, the level of interpolation can be equal to the sigmoid interpolation factor ($K_t$) multiplied by the Kalman max gain ($K_{max,t}$). This level of interpolation can then be used to generate the second output frame as provided by the following formula where $I_{out}$ represents the second output frame, $I_{in}$ represents the second input frame, $I_{prev}$ represents the first output frame, $K_t$ represents the sigmoid interpolation factor, $K_{max,t}$ represents the Kalman maximum gain, and $w_{in}$ represents a user parameter to control the weight of the second input frame:

$$I_{out} = w_{in} * I_{in} + (1.0 - w_{in}) * (K_t * K_{max,t} (I_{prev} - I_{in}) + I_{in})$$

In some cases, determining the level of interpolation includes determining one or more interpolation factors. For example, determining the level of interpolation can include determining a blending ratio based on a Kalman maximum gain map and a sigmoid interpolation factor.

In some cases, determining the level of interpolation includes determining a scaling factor. For example, the one or more interpolation settings can be used to generate a blending ratio used to blend at least a portion of the second input frame with the first output frame.

The process 700 includes generating a second output frame by interpolating the portion of the second input frame with the corresponding portion of the first output frame (708). For example, with respect to FIG. 6, the filter 600 can perform a blend of the input frame 402 and the previous output 602 using a Kalman gain map to generate the output frame 610.

In some cases where the level of interpolation includes determining the scaling factor, generating the second output frame includes generating the second output frame by applying the scaling factor to a sigmoid interpolation factor. For example, the one or more interpolation settings can be used to generate a blending ratio that is used to blend at least a portion of the second input frame with the first output frame to generate the second output frame.

In some cases, generating the second frame includes applying a user parameter to control the weight of the second input frame. For example, as described above with respect to FIGS. 4, 5, and 6, the user parameter $w_{in}$ can be used to control the weight of the input frame 402 during blending such that when $w_{in}$ is increased the weight of the input frame 402 is increased.

The process 700 optionally includes updating the measure of variance. The measure of variance can be updated using the stored variance and one or more interpolation settings. For example, with respect to FIG. 6, the previous noise variance map 626 can be updated using the Kalman gain map 620 and the sigmoid interpolation factor 606 (and, indirectly, the noise estimate of the input frame 402).

In some cases, updating the measure of variance includes one or more of applying a temporal smoothing factor, reducing the measure of variance with the Kalman maximum gain, or resetting the measure of variance to the noise estimate for the second input frame. For example, with respect to FIGS. 4, 5, and 6, the temporal smoothing factor "a" with a value between 0 and 1, the sigmoid interpolation factor $K_t$, the Kalman maximum gain map $K_{max,t}$, and the previous variance $P_{t-1}$ are used to update the measure of variance $P_t$.

The process 700 optionally includes storing the second output frame. As an example, with respect to FIG. 1, the second output may be stored in data storage of the computing device 102, such as a hard drive of the computing device 102.

The process 700 optionally includes storing the updated measure of variance. As an example, with respect to FIG. 1, updated measure of variance may be stored in data storage of the computing device 102, such as a hard drive of the computing device 102.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), peer-to-peer networks (having ad-hoc or static members), grid computing infrastructures, and the Internet.

The computing system can include clients and servers. A client and server are generally remote from each other and typically interact through a communication network. The relationship of client and server arises by virtue of computer programs running on the respective computers and having a client-server relationship to each other.

Invention is defined by the appended claims.

**Claims**

1.   A computer-implemented method comprising:

obtaining (702) image data for a series of frames of a video, the series of frames comprising a first input frame followed by a second input frame;

obtaining (704) (i) a first output frame resulting from noise reduction processing for the first input frame and (ii) a measure of variance associated with a portion of the first output frame, wherein the measure of variance represents a variance of the portion of the first input frame and a corresponding portion of one or more previous input frames;

determining (706) an interpolation setting for noise reduction processing of a portion of the second input frame based on (i) a measure of noise for the portion of the second input frame and (ii) the measure of variance associated with a corresponding portion of the first output frame; and

generating (708) a second output frame by interpolating the portion of the second input frame with the corresponding portion of the first output frame using the determined interpolation setting;

wherein determining the interpolation setting (706) for noise reduction processing the portion of the second input frame comprises:

determining a Kalman maximum gain based on (i) the measure of noise for the second input frame and (ii) the measure of variance associated with the first output frame; and

determining a sigmoid interpolation factor for the second input frame,

and wherein generating the second output frame comprises interpolating the second input frame with the first output frame by an amount determined based on the Kalman maximum gain and the sigmoid interpolation factor.

2.   The method of claim 1, further comprising determining the measure of noise present in the portion of the second input frame by a process which comprises determining a noise estimate for the second input frame using a noise model.

3.   The method of any one of claims 1 to 2, wherein the measure of noise for the portion of the second input frame is a noise variance.

4.   The method of any preceding claim, wherein the sigmoid interpolation factor is determined based on a threshold, a transition gain value, and a temporal difference measure indicating differences between the portion of the second input frame and the corresponding portion of the first output frame.

5.   The method of any one of claims 1 to 4, wherein the second input frame comprises pixels, and wherein the method comprises determining different interpolation settings for interpolating different groups of pixels of the second input frame with corresponding groups of pixels of the first output frame.

**6.** The method of any one of claims 1 to 5, comprising determining a two-dimensional map of interpolation settings for different blocks of pixels,
wherein the interpolation setting for noise reduction processing of the portion of the second input frame is one of the interpolation settings in the two-dimensional map of interpolation settings.

**7.** The method of claim 6, wherein the different blocks of pixels include at least two blocks of pixels in the second input frame and at least two corresponding blocks of pixels in the first output frame.

**8.** The method of any one of claims 1 to 7, comprising determining one or more of the following:

a two-dimensional variance map of variances corresponding to different blocks of pixels of the first output frame, wherein the measure of variance associated with the portion of the first output frame is one of the variances of the two-dimensional variance map;
a two-dimensional noise estimate map of noise estimates for different blocks of pixels of the second input frame, wherein the measure of noise for the portion of the second input frame is one of the noise estimates in the two-dimensional noise estimate map;
a two-dimensional Kalman gain map of Kalman maximum gains corresponding to different blocks of pixels, wherein the interpolation setting for noise reduction processing includes one of the Kalman maximum gains in the two-dimensional Kalman gain map; or
a two-dimensional sigmoid interpolation filter map of sigmoid interpolation factors corresponding to different blocks of pixels, wherein the interpolation setting for noise reduction processing includes one of the sigmoid interpolation factors in the two-dimensional sigmoid interpolation filter map.

**9.** The method of any one of claims 1 to 8, comprising determining a measure of variance associated with the second output frame based on at least one of the measure of variance associated with the portion of the first output frame or the interpolation setting for noise reduction processing of the portion of the second input frame the method preferably further comprising:

storing the measure of variance associated with the second output frame; and
using the stored measure of variance associated with the second output frame to determine an interpolation setting for a third input frame that follows the second input frame in a set of frames that correspond to a video, wherein the set of frames include the first input frame, the second input frame, and the third input frame.

**10.** The method of claim 9, wherein determining the measure of variance associated with the second output frame comprises at least one of the following:

applying a temporal smoothing factor to the measure of variance associated with the portion of the first output frame;
updating the measure of variance associated with the portion of the first output frame by reducing with a Kalman maximum gain for the second input frame; or
updating the measure of variance associated with the portion of the first output frame by resetting to an input noise estimate for the second input frame.

**11.** The method of any one of claims 1 to 10, comprising using motion vector estimation to determine that the portion of the second input frame corresponds to the portion of the first output frame.

**12.** The method of any one of claims 1 to 11, wherein generating the second output frame (708) comprises applying a scaling factor to the portion of the second input frame prior to interpolating the portion of the second input frame with the corresponding portion of the first output frame; and preferably wherein generating the second output frame (708) comprises applying unity minus the scaling factor to the portion of the first output frame prior to interpolating the portion of the second input frame with the corresponding portion of the first output frame.

**13.** The method of any one of claims 1 to 12, comprising storing the second output frame.

**14.** A system or device configured to perform the method of any one of claims 1 to 13.

**15.** One or more non-transitory machine-readable media storing instructions that, when executed by one or more processors, cause the one or more processors to perform the method of any one of claims 1 to 14.

**Patentansprüche**

1. Computerimplementiertes Verfahren, umfassend:

   Erlangen (702) von Bilddaten für eine Reihe von Frames eines Videos, wobei die Reihe von Frames einen ersten Eingangs-Frame gefolgt von einem zweiten Eingangs-Frame umfasst;
   Erlangen (704) (i) eines ersten Ausgangs-Frames, der sich aus einer Rauschverminderungsverarbeitung für den ersten Eingangs-Frame ergibt, und (ii) eines Varianzmaßes, das einem Abschnitt des ersten Ausgangs-Frames zugeordnet ist, wobei das Varianzmaß eine Varianz des Abschnitts des ersten Eingangs-Frames und eines entsprechenden Abschnitts eines oder mehrerer vorherigen Eingangs-Frames darstellt;
   Bestimmen (706) einer Interpolationseinstellung für die Rauschverminderungsverarbeitung eines Abschnitts des zweiten Eingangs-Frames auf Grundlage (i) eines Rauschmaßes für den Abschnitt des zweiten Eingangs-Frames und (ii) des Varianzmaßes, das einem entsprechenden Abschnitt des ersten Ausgangs-Frames zugeordnet ist; und
   Generieren (708) eines zweiten Ausgangs-Frames durch Interpolieren des Abschnitts des zweiten Eingangs-Frames mit dem entsprechenden Abschnitt des ersten Ausgangs-Frames unter Verwendung der bestimmten Interpolationseinstellung;
   wobei das Bestimmen der Interpolationseinstellung (706) für die Rauschverminderungsverarbeitung des Abschnitts des zweiten Eingangs-Frames Folgendes umfasst:

   Bestimmen einer maximalen Kalman-Verstärkung auf Grundlage (i) des Rauschmaßes für den zweiten Eingangs-Frame und (ii) des Varianzmaßes, das dem ersten Ausgangs-Frame zugeordnet ist; und
   Bestimmen eines Sigmoid-Interpolationsfaktors für den zweiten Eingangs-Frame, und wobei das Generieren des zweiten Ausgangs-Frames Interpolieren des zweiten Eingangs-Frames mit dem ersten Ausgangs-Frame um einen Betrag umfasst, der auf Grundlage der maximalen Kalman-Verstärkung und des Sigmoid-Interpolationsfaktors bestimmt wird.

2. Verfahren nach Anspruch 1, ferner umfassend Bestimmen des Rauschmaßes, das in dem Abschnitt des zweiten Eingangs-Frames vorhanden ist, durch einen Prozess, der Bestimmen einer Rauschschätzung für den zweiten Eingangs-Frame unter Verwendung eines Rauschmodells umfasst.

3. Verfahren nach einem der Ansprüche 1 bis 2, wobei das Rauschmaß für den Abschnitt des zweiten Eingangs-Frames eine Rauschvarianz ist.

4. Verfahren nach einem der vorhergehenden Ansprüche, wobei der Sigmoid-Interpolationsfaktor auf Grundlage eines Schwellenwerts, eines Übergangsverstärkungswerts und eines zeitlichen Differenzmaßes bestimmt wird, das Differenzen zwischen dem Abschnitt des zweiten Eingangs-Frames und dem entsprechenden Abschnitt des ersten Ausgangs-Frames angibt.

5. Verfahren nach einem der Ansprüche 1 bis 4, wobei der zweite Eingangs-Frame Pixel umfasst und wobei das Verfahren Bestimmen unterschiedlicher Interpolationseinstellungen zum Interpolieren unterschiedlicher Gruppen von Pixeln des zweiten Eingangs-Frames mit entsprechenden Gruppen von Pixeln des ersten Ausgangs-Frames umfasst.

6. Verfahren nach einem der Ansprüche 1 bis 5, umfassend Bestimmen einer zweidimensionalen Abbildung von Interpolationseinstellungen für unterschiedliche Blöcke von Pixeln,
   wobei die Interpolationseinstellung für die Rauschverminderungsverarbeitung des Abschnitts des zweiten Eingangs-Frames eine der Interpolationseinstellungen in der zweidimensionalen Abbildung von Interpolationseinstellungen ist.

7. Verfahren nach Anspruch 6, wobei die unterschiedlichen Blöcke von Pixeln mindestens zwei Blöcke von Pixeln in dem zweiten Eingangs-Frame und mindestens zwei entsprechende Blöcke von Pixeln in dem ersten Ausgangs-Frame umfassen.

8. Verfahren nach einem der Ansprüche 1 bis 7, umfassend Bestimmen eines oder mehrerer der Folgenden:

   einer zweidimensionalen Varianzabbildung von Varianzen, die unterschiedlichen Blöcken von Pixeln des ersten Ausgangs-Frames entsprechen, wobei das Varianzmaß, das dem Abschnitt des ersten Ausgangs-Frames zugeordnet ist, eine der Varianzen der zweidimensionalen Varianzabbildung ist;

einer zweidimensionalen Rauschschätzungsabbildung von Rauschschätzungen für unterschiedliche Blöcke von Pixeln des zweiten Eingangs-Frames, wobei das Rauschmaß für den Abschnitt des zweiten Eingangs-Frames eine der Rauschschätzungen in der zweidimensionalen Rauschschätzungsabbildung ist;

einer zweidimensionalen Kalman-Verstärkungsabbildung von maximalen Kalman-Verstärkungen, die unterschiedlichen Blöcken von Pixeln entsprechen, wobei die Interpolationseinstellung für die Rauschverminderungsverarbeitung eine der maximalen Kalman-Verstärkungen in der zweidimensionalen Kalman-Verstärkungsabbildung beinhaltet; oder

einer zweidimensionalen Sigmoid-Interpolationsfilterabbildung von Sigmoid-Interpolationsfaktoren, die unterschiedlichen Blöcken von Pixeln entsprechen, wobei die Interpolationseinstellung für die Rauschverminderungsverarbeitung einen der Sigmoid-Interpolationsfaktoren in der zweidimensionalen Sigmoid-Interpolationsfilterabbildung beinhaltet.

9. Verfahren nach einem der Ansprüche 1 bis 8, umfassend Bestimmen eines Varianzmaßes, das dem zweiten Ausgangs-Frame zugeordnet ist, auf Grundlage mindestens eines von dem Varianzmaß, das dem Abschnitt des ersten Ausgangs-Frames zugeordnet ist, oder der Interpolationseinstellung für die Rauschverminderungsverarbeitung des Abschnitts des zweiten Eingangs-Frames, wobei das Verfahren vorzugsweise ferner Folgendes umfasst:

Speichern des Varianzmaßes, das dem zweiten Ausgangs-Frame zugeordnet ist; und
Verwenden des gespeicherten Varianzmaßes, das dem zweiten Ausgangs-Frame zugeordnet ist, um eine Interpolationseinstellung für einen dritten Eingangs-Frame zu bestimmen, der auf den zweiten Eingangs-Frame in einem Satz von Frames folgt, der einem Video entspricht,
wobei der Satz von Frames den ersten Eingangs-Frame, den zweiten Eingangs-Frame und den dritten Eingangs-Frame beinhaltet.

10. Verfahren nach Anspruch 9, wobei das Bestimmen des Varianzmaßes, das dem zweiten Ausgangs-Frame zugeordnet ist, mindestens eines von Folgenden umfasst:

Anwenden eines zeitlichen Glättungsfaktors auf das Varianzmaß, das dem Abschnitt des ersten Ausgangs-Frames zugeordnet ist;
Aktualisieren des Varianzmaßes, das dem Abschnitt des ersten Ausgangs-Frames zugeordnet ist, durch Vermindern mit einer maximalen Kalman-Verstärkung für den zweiten Eingangs-Frame; oder
Aktualisieren des Varianzmaßes, das dem Abschnitt des ersten Ausgangs-Frames zugeordnet ist, durch Zurücksetzen einer Schätzung eines Eingangsrauschens für den zweiten Eingangs-Frame.

11. Verfahren nach einem der Ansprüche 1 bis 10, umfassend Verwenden einer Bewegungsvektorschätzung, um zu bestimmen, dass der Abschnitt des zweiten Eingangs-Frames dem Abschnitt des ersten Ausgangs-Frames entspricht.

12. Verfahren nach einem der Ansprüche 1 bis 11, wobei das Generieren des zweiten Ausgangs-Frames (708) Anwenden eines Skalierungsfaktors auf den Abschnitt des zweiten Eingangs-Frames vor dem Interpolieren des Abschnitts des zweiten Eingangs-Frames mit dem entsprechenden Abschnitt des ersten Ausgangs-Frames umfasst; und wobei das Generieren des zweiten Ausgangs-Frames (708) vorzugsweise Anwenden von Eins minus dem Skalierungsfaktor auf den Abschnitt des ersten Ausgangs-Frames vor dem Interpolieren des Abschnitts des zweiten Eingangs-Frames mit dem entsprechenden Abschnitt des ersten Ausgangs-Frames umfasst.

13. Verfahren nach einem der Ansprüche 1 bis 12, umfassend Speichern des zweiten Ausgangs-Frames.

14. System oder Vorrichtung, das bzw. die dazu konfiguriert ist, das Verfahren nach einem der Ansprüche 1 bis 13 durchzuführen.

15. Ein oder mehrere nicht transitorische maschinenlesbare Medien, die Anweisungen speichern, die bei Ausführung durch einen oder mehrere Prozessoren den einen oder die mehreren Prozessoren dazu veranlassen, das Verfahren nach einem der Ansprüche 1 bis 14 durchzuführen.

**Revendications**

1. Procédé mis en œuvre par ordinateur comprenant :

l'obtention (702) de données d'image pour une série d'images d'une vidéo, la série d'images comprenant une première image d'entrée suivie d'une deuxième image d'entrée ;

l'obtention (704) (i) d'une première trame de sortie résultant d'un traitement de la réduction du bruit pour la première trame d'entrée et (ii) d'une mesure de variance associée à une partie de la première trame de sortie, dans lequel la mesure de variance représente une variance de la partie de la première trame d'entrée et une partie correspondante d'une ou plusieurs trames d'entrée précédentes ;

la détermination (706) d'un paramètre d'interpolation pour le traitement de la réduction du bruit d'une partie de la deuxième trame d'entrée sur la base (i) d'une mesure de bruit pour la partie de la deuxième trame d'entrée et (ii) de la mesure de variance associée à une partie correspondante de la première trame de sortie ; et

la génération (708) d'une seconde trame de sortie en interpolant la partie de la deuxième trame d'entrée avec la partie correspondante de la première trame de sortie à l'aide du paramètre d'interpolation déterminé ;

dans lequel la détermination du paramètre d'interpolation (706) pour le traitement de la réduction du bruit de la partie de la deuxième trame d'entrée comprend :

la détermination d'un gain maximal de Kalman sur la base de (i) la mesure de bruit pour la deuxième trame d'entrée et (ii) la mesure de variance associée à la première trame de sortie ; et

la détermination d'un facteur d'interpolation sigmoïde pour la deuxième trame d'entrée, et dans lequel la génération de la seconde trame de sortie comprend l'interpolation de la deuxième trame d'entrée avec la première trame de sortie d'une quantité déterminée sur la base du gain maximal de Kalman et du facteur d'interpolation sigmoïde.

2. Procédé selon la revendication 1, comprenant également la détermination de la mesure de bruit présent dans la partie de la deuxième trame d'entrée par un processus qui comprend la détermination d'une estimation de bruit pour la deuxième trame d'entrée à l'aide d'un modèle de bruit.

3. Procédé selon l'une quelconque des revendications 1 et 2, dans lequel la mesure de bruit pour la partie de la deuxième trame d'entrée est une variance de bruit.

4. Procédé selon une quelconque revendication précédente, dans lequel le facteur d'interpolation sigmoïde est déterminé sur la base d'un seuil, d'une valeur de gain de transition, et d'une mesure de différence temporelle indiquant des différences entre la partie de la deuxième trame d'entrée et la partie correspondante de la première trame de sortie.

5. Procédé selon l'une quelconque des revendications 1 à 4, dans lequel la deuxième trame d'entrée comprend des pixels, et dans lequel le procédé comprend la détermination de différents paramètres d'interpolation pour interpoler différents groupes de pixels de la deuxième trame d'entrée avec des groupes correspondants de pixels de la première trame de sortie.

6. Procédé selon l'une quelconque des revendications 1 à 5, comprenant la détermination d'une carte bidimensionnelle de paramètres d'interpolation pour différents blocs de pixels, dans lequel le paramètre d'interpolation pour le traitement de la réduction du bruit de la partie de la deuxième trame d'entrée est l'un des paramètres d'interpolation dans la carte bidimensionnelle de paramètres d'interpolation.

7. Procédé selon la revendication 6, dans lequel les différents blocs de pixels comportent au moins deux blocs de pixels dans la deuxième trame d'entrée et au moins deux blocs de pixels correspondants dans la première trame de sortie.

8. Procédé selon l'une quelconque des revendications 1 à 7, comprenant la détermination d'une ou plusieurs :

d'une carte de variance bidimensionnelle de variances correspondant à différents blocs de pixels de la première trame de sortie, dans lequel la mesure de variance associée à la partie de la première trame de sortie est l'une des variances de la carte de variance bidimensionnelle ;

d'une carte d'estimation de bruit bidimensionnelle d'estimations de bruit pour différents blocs de pixels de la deuxième trame d'entrée, dans lequel la mesure de bruit pour la partie de la deuxième trame d'entrée est l'une des estimations de bruit dans la carte d'estimation de bruit bidimensionnelle ;

d'une carte de gain de Kalman bidimensionnelle des gains maximaux de Kalman correspondant à différents blocs de pixels, dans lequel le paramètre d'interpolation pour le traitement de la réduction du bruit comporte l'un des gains maximaux de Kalman dans la carte de gain de Kalman bidimensionnelle ; ou

d'une carte de filtre d'interpolation sigmoïde bidimensionnelle de facteurs d'interpolation sigmoïde correspondant à différents blocs de pixels, dans lequel le paramètre d'interpolation pour le traitement de la réduction du bruit comporte l'un des facteurs d'interpolation sigmoïde dans la carte de filtre d'interpolation sigmoïde bidimensionnelle.

9. Procédé selon l'une quelconque des revendications 1 à 8, comprenant la détermination d'une mesure de variance associée à la seconde trame de sortie sur la base d'au moins une de la mesure de variance associée à la partie de la première trame de sortie ou du paramètre d'interpolation pour le traitement de la réduction du bruit de la partie de la deuxième trame d'entrée le procédé comprenant également de préférence :

le stockage de la mesure de variance associée à la seconde trame de sortie ; et
l'utilisation de la mesure de variance stockée associée à la seconde image de sortie pour déterminer un paramètre d'interpolation pour une troisième image d'entrée qui suit la deuxième image d'entrée dans un ensemble d'images qui correspondent à une vidéo,
dans lequel l'ensemble de trames comportent la première trame d'entrée, la deuxième trame d'entrée, et la troisième trame d'entrée.

10. Procédé selon la revendication 9, dans lequel la détermination de la mesure de variance associée à la seconde trame de sortie comprend au moins l'une :

de l'application d'un facteur de lissage temporel à la mesure de variance associée à la partie de la première trame de sortie ;
de la mise à jour de mesure de variance associée à la partie de la première trame de sortie par réduction avec un gain maximal de Kalman pour la deuxième trame d'entrée ; ou
de la mise à jour de la mesure de variance associée à la partie de la première trame de sortie par réinitialisation à une estimation de bruit d'entrée pour la deuxième trame d'entrée.

11. Procédé selon l'une quelconque des revendications 1 à 10, comprenant l'utilisation d'une estimation de vecteur de mouvement pour déterminer que la partie de la deuxième trame d'entrée correspond à la partie de la première trame de sortie.

12. Procédé selon l'une quelconque des revendications 1 à 11, dans lequel la génération de la seconde trame de sortie (708) comprend l'application d'un facteur d'échelle à la partie de la deuxième trame d'entrée avant l'interpolation de la partie de la deuxième trame d'entrée avec la partie correspondante de la première trame de sortie ; et de préférence dans lequel la génération de la seconde trame de sortie (708) comprend l'application de l'unité moins le facteur d'échelle à la partie de la première trame de sortie avant l'interpolation de la partie de la deuxième trame d'entrée avec la partie correspondante de la première trame de sortie.

13. Procédé selon l'une quelconque des revendications 1 à 12, comprenant le stockage de la seconde trame de sortie.

14. Système ou dispositif configuré pour réaliser le procédé selon l'une quelconque des revendications 1 à 13.

15. Un ou plusieurs supports non transitoires lisibles par ordinateur stockant des instructions qui, lorsqu'elles sont exécutées par un ou plusieurs processeurs, amènent les un ou plusieurs processeurs à réaliser le procédé selon l'une quelconque des revendications 1 à 14.

EP 4 189 634 B1

FIG. 1

23

**FIG. 2A**

**FIG. 2B**

NOISE KEY

Noise level:
0
1
2
3
4
5

$202a$ — $T_0$

$T_1$ Blending Ratio: 0.1

$204a$ — $T_1$

$Variance_{T0, T1}(A)$:
High

Output Frame $T_1$ (A) =
0.1(Output Frame $T_0$(A))
+ 0.9(Input Frame $T_1$(A))

Result:
Noise level 5

$T_2$ Blending Ratio: 0.9

$206a$ — $T_2$

$Variance_{T1, T2}(A)$:
Low

Output Frame $T_2$ (A) =
0.9(Output Frame $T_1$(A))
+ 0.1(Input Frame $T_2$(A))

Result:
Noise level 5

$202b$ — $T_0$

$T_1$ Blending Ratio: 0.1

$204b$ — $T_1$

$Variance_{T0, T1}(A)$:
High

Output Frame $T_1$ (A) =
0.1(Output Frame $T_0$(A))
+ 0.9(Input Frame $T_1$(A))

Result:
Noise level 5

$T_2$ Blending Ratio: 0.5

$206b$ — $T_2$

$Variance_{T1, T2}(A)$:
Low

Output Frame $T_2$ (A) =
0.5(Output Frame $T_1$(A))
+ 0.5(Input Frame $T_2$(A))

Result:
Noise level 3

EP 4 189 634 B1

Input Frame 302

NOISE KEY 130
Noise level: 0 1 2 3 4 5

Input Noise Map 310

Previous Output Frame 320

VARIANCE KEY 340
Variance level: 0 1 2 3 4 5

Previous Frame Noise Variance Map 330

FIG. 3

EP 4 189 634 B1

FIG. 4

EP 4 189 634 B1

FIG. 5

FIG. 6

700

OBTAIN IMAGE DATA FOR A SERIES OF FRAMES OF A VIDEO, THE SERIES OF FRAMES INCLUDING A FIRST INPUT FRAME FOLLOWED BY A SECOND INPUT FRAME
**702**

OBTAIN (I) A FIRST OUTPUT FRAME RESULTING FROM NOISE REDUCTION PROCESSING FOR THE FIRST INPUT FRAME AND (II) A MEASURE OF VARIANCE ASSOCIATED WITH A PORTION OF THE FIRST OUTPUT FRAME

**704**

DETERMINE AN INTERPOLATION SETTING FOR NOISE REDUCTION PROCESSING OF A PORTION OF THE SECOND INPUT FRAME
**706**

GENERATE A SECOND OUTPUT FRAME BY INTERPOLATING THE PORTION OF THE SECOND INPUT FRAME WITH THE CORRESPONDING PORTION OF THE FIRST OUTPUT FRAME
**708**

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1681849 A

- US 544262 A

### Non-patent literature cited in the description

- **KIM MINJAE et al.** A novel approach for denoising and enhancement of extremely low-light video. *IEEE Transactions on Consumer Electronics*, vol. 61 (1), 72-80